(19) Europäisches Patentamt
European Patent Office
Office européen des brevets

(11) Veröffentlichungsnummer : **0 307 701 B1**

(12) **EUROPÄISCHE PATENTSCHRIFT**

(45) Veröffentlichungstag der Patentschrift : **03.07.91 Patentblatt 91/27**

(51) Int. Cl.[5] : **C09D 201/06,** C09D 7/12, C08K 5/34, C08K 5/35, C08L 35/00, C08L 33/06, C08F 8/32

(21) Anmeldenummer : **88114038.8**

(22) Anmeldetag : **29.08.88**

# (54) Verfahren zur Herstellung von feuchtigkeitshärtenden Bindemittelkombinationen, die nach diesem Verfahren erhältlichen Kombinationen und ihre Verwendung.

Die Akte enthält technische Angaben, die nach dem Eingang der Anmeldung eingereicht wurden und die nicht in dieser Patentschrift enthalten sind.

(30) Priorität : **08.09.87 DE 3730066**

(43) Veröffentlichungstag der Anmeldung : **22.03.89 Patentblatt 89/12**

(45) Bekanntmachung des Hinweises auf die Patenterteilung : **03.07.91 Patentblatt 91/27**

(84) Benannte Vertragsstaaten : **AT BE CH DE ES FR GB IT LI NL SE**

(56) Entgegenhaltungen :
**EP-A- 0 001 065**
**EP-A- 0 070 536**
**DE-A- 2 610 406**
**DE-A- 2 853 477**

(73) Patentinhaber : **BAYER AG**
**W-5090 Leverkusen 1 Bayerwerk (DE)**

(72) Erfinder : **Blum, Harald, Dr.**
**Auf dem Westkamp 1**
**W-4175 Wachtendonk (DE)**
Erfinder : **Pedain, Josef, Dr.**
**Haferkamp 6**
**W-5000 Köln 80 (DE)**
Erfinder : **Wamprecht, Christian, Dr.**
**Bahnhofstrasse 51**
**W-4040 Neuss 22 (DE)**

**EP 0 307 701 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von unter dem Einfluß von Feuchtigkeit aushärtbaren Bindemittelkombinationen, bestehend im wesentlichen aus, mindestens zwei intramolekulare Carbonsäureanhydridgruppen aufweisenden organischen Verbindungen und Hexahydropyrimidin- bzw. Tetrahydroimidazolgruppen enthaltende Verbindungen, die nach diesem Verfahren erhaltenen Kombinationen und ihre Verwendung als unter dem Einfluß von Feuchtigkeit aushärtbare Lacke oder Beschichtungsmassen oder zur Herstellung derartiger Lacke oder Beschichtungsmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmassen ist aus der EP-A-48 128 bereits bekannt. Der Gedanke, das Prinzip dieser Vorveröffentlichung auf die Umsetzung von Aminen mit Anhydriden zu übertragen, scheitert jedoch an der Tatsache, daß die Umsetzung von Aminen mit Anhydriden eine bereits bei Raumtemperatur sehr rasch ablaufende Reaktion darstellt, die unter Anhydridspaltung zu vernetzten Produkten führt. Die daraus resultierenden extrem kurzen Standzeiten verhindern bisher die gemeinsame Verwendung von Polyanhydriden und Polyaminen in Beschichtungssystemen.

Eine Lösungsmöglichkeit wird in der DE-OS 2 853 477 aufgezeigt. Dort werden Mischungen aus blockierten Polyaminen und aus Polyanhydriden beschrieben, die gute Standzeiten aufweisen, jedoch bei Zugabe von Wasser zu vernetzten Produkten aushärten. Als geeignete blockierte Polyamine werden Ketimine bzw. Aldimine beschrieben, die durch Umsetzung von Polyaminen mit Ketonen bzw. Aldehyden erhalten werden.

Als Polyanhydride werden Verbindungen mit wenigstens 2 cyclischen Carbonsäureanhydridgruppen im Molekül, insbesondere Umsetzungsprodukte von Polyolen mit cyclischen Dianhydriden bei einem Hydroxyl-/Anhydridgruppenverhältnis von 1 : 2, oder Copolymerisate eines ungesättigten cyclischen Anhydrids mit mehrfach ungesättigten Verbindungen oder α-Olefinen genannt.

Die bei der Herstellung der Copolymerisate einzusetzenden olefinisch ungesättigten Verbindungen werden in der allgemeinen Beschreibung der DE-OS 2 853 477 nur sehr pauschal abgehandelt, insbesondere fehlt jeglicher Hinweis bezüglich der Mengenverhältnisse der einzelnen Monomeren, die bei der Herstellung der Copolymerisate zum Einsatz gelangen sollen. Die konkrete Offenbarung der Ausführungsbeispiele beschränkt sich auf Copolymerisate aus Butadienöl und Maleinsäureanhydrid im Verhältnis 1 : 1 und auf Copolymerisate von Holzöl mit Maleinsäureanhydrid. Diese Copolymerisate sind jedoch mit Nachteilen behaftet, da ihre Kombination mit Bisketiminen bzw. Bisaldiminen letztendlich zu stark verfärbten Produkten führt. Im übrigen führen Beschichtungsmittel, die als Bindemittelkomponente ungesättigte Öle wie Butadienöl oder Holzöl enthalten zu Überzügen, die leicht zur Versprödung neigen und nicht wetterbeständig sind.

Außerdem muß, wie den Ausführungsbeispielen der DE-OS 2 853 477 zu entnehmen, bei der Verarbeitung der dort konkret beschriebenen Bindemittel Dimethylformamid als Lösungsmittel eingesetzt werden, wobei außerdem nicht akzeptable Feststoffgehalte von lediglich ca. 20% zur Anwendung gelangen.

Eine weitere Möglichkeit, die Standzeiten zu verlängern besteht in der Verwendung von Oxazolanen anstelle der Amine.

Wasserhärtbare Zusammensetzungen aus Oxazolanen und Polyanhydriden sind im Prinzip aus der DE-OS 2 610 406 bekannt. Dort werden Oxazolane mit Polyanhydriden für wasserhärtbare Dicht- und Klebstoffmassen kombiniert.

Als geeignete Polyanhydride werden Umsetzungsprodukte von mehrfach ungesättigten Fettsäuren mit Maleinsäureanhydrid und Polyanhydride aus $C_3$-$C_6$-Alkyl-(meth)acrylat und Maleinsäureanhydrid, insbesondere aus Butylacrylat und Maleinsäureanhydrid beschrieben.

Wie eigene Versuche der Anmelderin zeigten, sind die in der DE-OS 2 610 406 konkret beschriebenen Systeme bezüglich ihrer Eignung zur Herstellung hochwertiger, farbloser Lackfilme hoher Härte und guter Lösungsmittel- und Chemikalienbeständigkeit noch stark verbesserungsbedürftig. Dies gilt sowohl für die in den Ausführungsbeispielen beschriebenen Systemen auf Basis von Copolymerisaten aus Maleinsäureanhydrid und Butylacrylat als auch für die Systeme auf Basis von Umsetzungsprodukten von Maleinsäureanhydrid mit mehrfach ungesättigten Fettsäureestern, die zu vergilbenden Endprodukten führen.

Es war daher die der Erfindung zugrundeliegende Aufgabe, neue Bindemittelkombinationen auf Basis von Polyanhydriden und modifizierten Polyaminen zur Verfügung zu stellen, die zur Herstellung von hochwertigen, unter dem Einfluß von Luftfeuchtigkeit aushärtbaren Systemen geeignet sind, wobei die Bindemittelsysteme eine ausreichende Topfzeit aufweisen müssen und in vertretbaren Zeiträumen zu klaren, vergilbungsbeständigen, lösungsmittelfesten Filmen ausgehärtet werden können.

Diese Aufgabe konnte durch die Bereitstellung des nachstehend näher beschriebenen erfindungsgemäßen Verfahrens gelöst werden, bei welchem eine Kombination von Polyanhydriden der nachstehend näher beschriebenen Art mit Hexahydropyrimidin- oder Tetrahydroimidazolgruppen aufweisenden Verbindungen der

nachstehend näher beschriebenen Art erfolgt.

Gegenstand der Erfindung ist ein Verfahren zur Herstellung von feuchtigkeitshärtenden Bindemittelkompositionen durch Abmischung und gegebenenfalls Umsetzung unter Feuchtigkeitsausschluß von

A) 30 bis 99 Gew.-Teilen mindestens einer Verbindung, welche mindestens zwei intramolekulare Carbansäureanhydridgruppen enthält, mit

B) 1 bis 70 Gew.-Teilen an, organischen Verbindungen mit blockierten Aminogruppen, aus denen unter dem Einfluß von Feuchtigkeit freie primäre und/oder sekundäre Aminogruppen gebildet werden,

gegebenenfalls unter Mitverwendung von Lösungsmitteln und/oder sonstigen aus der Lacktechnologie bekannten Hilfs- und Zusatzstoffen, dadurch gekennzeichnet, daß man als Verbindungen A) in an sich bekannter Weise hergestellte, Bernsteinsäureanhydrid-Einheiten aufweisende Copolymerisate des Molekulargewichtsbereichs Mw von 1500 bis 75000 von

a) 4,5 bis 45 Gew.-Teile Maleinsäureanhydrid,

b) 5 bis 80 Gew.-Teile Monomeren der Formel

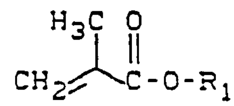

und/oder der Formel

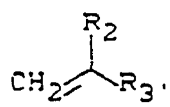

und

c) 15 bis 92 Gew.-Teile Monomeren der Formel

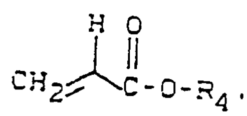

wobei in den genannten Formeln

$R_1$ für einen aliphatischen oder cyoloaliphatischen, gegebenenfalls Sauerstoff, Schwefel oder Stickstoff als Heteroatom enthaltenden Kohlenwasserstoffrest mit 1 bis 12 Kohlenstoffatomen steht,

$R_2$ für Wasserstoff, eine Methyl- oder Ethylgruppe oder für Chlor oder Fluor steht,

$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe ader einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht, und

$R_4$ bezüglich seiner Bedeutung der für $R_1$ gemachten Definition entspricht,

und als Verbindungen B), gegebenenfalls gegenüber Säureanhydridgruppen reaktionsfähige Wasserstoffatome aufweisende, Hexahydropyrimidin- oder Tetrahydroimidazolgruppen und gegebenenfalls außer diesen noch weitere blockierte Aminogruppen aufweisende organische Verbindungen verwendet,

wobei die Mengenverhältnisse der Einzelkomponenten unter Einbeziehung der gegebenenfalls in Abwesenheit von Feuchtigkeit zwischen den Komponenten A) und B) spontan ablaufenden Additionsreaktion so gewählt werden, daß in der resultierenden Komposition auf jede Hexahydropyrimidin- bzw. Tetrahydroimidazolgruppe 0,25 bis 50 Anhydridgruppen entfallen.

Gegenstand der Erfindung sind auch die nach diesem Verfahren erhätlichen Bindemittekombinationen.

Gegenstand der Erfindung ist schließlich auch die Verwendung der nach dem erfindungsgemäßen Verfahren erhätlichen Bindemittelkombinationen als unter Einfluß von Feuchtigkeit aushäbare Lacke oder Beschichtungsmassen oder zur Herstellung derartiger Lacke oder Beschichtungsmassen.

Bei den Verbindungen A) handelt es sich um "bernsteinsäureanhydridhaltige Copolymerisate", worunter im Rahmen der Erfindung Copolymerisate von Maleinsäureanhydrid mit anderen olefinisch ungesättigten Monomeren der obengenannten allgemeinen Formeln und nachstehend näher beschriebenen Art zu verstehen sind, die "Bernsteinsäureanhydrid-Gruppierungen" der Formel

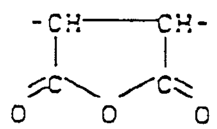

enthalten, wie sie bei der Polymerisabon bzw. Copolymerisation von Maleinsäureanhydrid in das Polymerisat eingebaut werden.

Besonders bevorzugt handelt es sich bei den erfindungsgemäßen Ausgangskomponenten A) um Copolymerisate von Maleinsäureanhydrid mit Monomeren b) und c) der obengenannten allgemeinen Formeln, für welche

- $R_1$ für einen linearen oder verzweigten aliphatischen Kahlenwasserstoffrest mit 1 bis 8 Kohlenstoffatomen steht,
- $R_2$ für Wasserstoff oder eine Methylgruppe steht,
- $R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht, und
- $R_4$ bezüglich seiner Bedeutung der zuletzt für $R_1$ gemachten Definition entspricht.

Typische Beispiele für geeignete bzw. bevorzugte Reste $R_1$ bzw. $R_4$ sind Methyl-, Ethyl-, n-Propyl, Isapropyl-, n-Butyl-, Isobutyl-, n-Pentyl-, n-Hexyl-, 2-Ethylhexyl-, n-Octyl, n-Decyl- oder n-Dodecylreste.

Typische Beispiele für geeignete bzw. bevorzugte Reste $R_2$ sind Wasserstoff-, Methyl-, Ethyl-, Chlor- oder Fluor-.

Typische Beispiele für geeignete bzw. bevorzugte Reste $R_3$ sind aliphatische Reste der soeben für $R_1$ beispielhaft genannten Art mit Ausnahme von Wasserstoff und Methyl und außerdem Phenyl-, Cyclohexyl-, 2-, 3- und 4-Methylphenyl-, Propoxy-, n-Butoxy-, Acetyl-, Propionyl-, n-Butyryl- oder N-Methoxymethyl-aminocarbonyl-Reste.

Bevorzugte Komponenten A) sind im übrigen solche, in denen

a) 4,5 bis 45 Gew.-Teile, insbesondere 4,5 bis 19 Gew.-Teile Maleinsäureanhydrid,

b) 25 bis 80 Gew.-Teile, insbesondere 41 bis 65 Gew.-Teile an Monomeren der Formeln

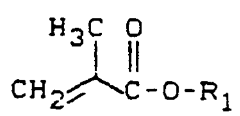

und/oder

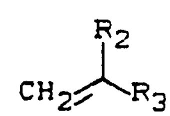

und

c) 20 bis 75 Gew.-Teile, insbesondere 25 bis 50 Gew.-Teile an Monomeren der Formel

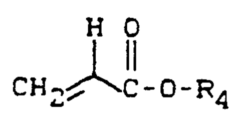

in copolymerisierter Form vorliegen.

Besonders bevorzugt werden als Komponente A) solche der gemachten Definition entsprechende Copolymerisate eingesetzt, in denen pro 100 Gew.-Teilen Maleinsäureanhydrid 40 bis 140 Gew.-Teile an anderen

Monomeren ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

Die bevorzugte Komponente A), d.h. die bernsteinsäureanhydridhaltigen Copolymerisate weisen im allgemeinen ein als Gewichtsmittel bestimmtes Molekulargewicht von 1500 bis 75000, vorzugsweise von 3000 bis 50000 und ganz besonders bevorzugt von 5000 bis 35000 auf. Ihr Anhydridäquivalentgewicht (= Menge in "g", die 1 Mol Anhydridgruppen enthält) liegt bei 4900 bis 217, vorzugsweise bei 2100 bis 326. Sie werden in an sich bekannter Weise durch eine radikalisch initiierte Copolymerisation, vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Geeignet sind beispielsweise Ester wie Ethylacetat, Propylacetat, Butylacetat, Isopropylacetat, Isobutylacetat, sec.-Butylacetat, Amylacetat, Hexylacetat, Benzylacetat, Ethylpropionat, Butylpropionat, Methylglykolacetat, Ethylglykolacetat, Butylglykolacetat, Ethyldiglykolacetat, Ethylglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Benzin, Terpentinöl, Solventnaphtha, Terpene, Hexan, Heptan, Octan, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösungsmittel.

Die Copolymerisation wird üblicherweise bei Feststoffgehalten von 30 bis 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96%, bevorzugt mehr als 99% beendet. Gegebenenfalls ist es erforderlich durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Maleinsäureanhydridrestmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomerenmischung, wie z.B. Styrol, Butylacrylat, zu reduzieren.

Es ist auch möglich einen Teil des Maleinsäureanhydrids mit dem Lösungsmittel vorzulegen, oder das Maleinsäureanhydrid schneller als die anderen Monomeren zuzutropfen. Diese geänderten Herstellverfahren können in gewissen Fällen die Verträglichkeit der Komponenten der Bindemittelkombination verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für Reaktionstemperaturen von 60 bis 180°C geeignet sind, wie organische Peroxide, z.B. : Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2′-Azobis-(2,4-dimethylvaleronitril), 2,2′-Azobis-(isobutyronitril), 2,2′-Azobis-(2,3-dimethylbutyronitril), 1,1′-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan, Mercaptoethanol usw. in Mengen von 0 bis 10 Gew.-% eingesetzt werden.

Bei der Komponente B) handelt es sich um blockierte Aminogruppen aufweisende Verbindungen eines als Gewichtsmittel bestimmten Molekulargewichts von 86 bis 10.000, vorzugsweise von 128 bis 3.000 und insbesondere von 350 bis 1.500 oder um Gemische derartiger Verbindungen. Erfindungswesentlich ist hierbei, daß die die Komponente B) darstellenden Verbindungen im statistischen Mittel, gegebenenfalls neben anderen blockierten Aminogruppen, pro Molekül mindestens 0,01, vorzugsweise 0,5 bis 4 und insbesondere 1 bis 3 Struktureinheiten der allgemeinen Formel

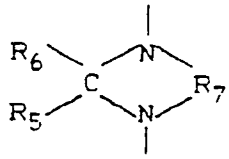

enthalten, wobei in dieser Formel

$R_5$ und $R_6$ für gleiche oder verschiedene Reste stehen und Wasserstoff, aliphatische Kohlenwasserstoffreste mit 1 bis 18 Kohlenstoffatomen, cycloaliphatische Kohlenwasserstoffreste mit 5 bis 10 Kohlenstoffatomen, araliphatische Kohlenwasserstoffreste mit 7 bis 18 Kohlenstoffatomen oder Phenylreste bedeuten, wobei die beiden Reste $R_5$ und $R_6$ zusammen mit dem Kohlenstoffatom des heterocyclischen Rings auch einen 5- oder 6-gliedrigen cycloaliphatischen Ring bilden können, mit der Maßgabe, daß nur einer der Reste für Wasserstoff steht, und

$R_7$ für einen zweiwertigen aliphatischen Kohlenwasserstoffrest mit 2 bis 4 Kohlenstoffatomen steht, mit der Maßgabe, daß zwischen den beiden Stickstoffatomen 2 oder 3 Kohlenstoffe angeordnet sind.

Ganz besonders bevorzugt werden solche Hexahydropyrimidine bzw. Tetrahydroimidazole mit Struktureinheiten der genannten allgemeinen Formel eingesetzt, für welche

$R_5$ und $R_6$ für gleiche oder verschiedene aliphatische Kohlenwasserstoffreste mit 1 bis 4 Kohlenstoffatomen stehen, wobei einer der Reste auch für Wasserstoff stehen kann, und

$R_7$ für einen Ethylen- oder Trimethylenrest steht.

Die in der Komponente B) vorliegenden, Hexahydropyrimidin- bzw. Tetrahydroimidazolgruppen aufweisenden Verbindungen können neben diesen Gruppen auch noch weitere funktionelle Gruppen aufweisen. Hierbei handelt es sich (i) um gegenüber Säureanhydridgruppen reaktionsfähige Hydroxyl- und/oder Aminogruppen und/oder um (ii) bei Abwesenheit von Feuchtigkeit gegenüber Säureanhydridgruppen weitgehend inerte, blockierte Aminogruppen, ausgewählt aus der Gruppe bestehend aus Oxazolan-, Aldimin- und Ketimingruppen.

Als Komponente B) bzw. als erfindungswesentlicher Teil der Komponente B) geeignete Hexahydropyrimidine bzw. Tetrahydroimidazole sind beispielsweise Verbindungen der allgemeinen Formel

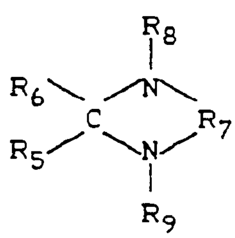

in welcher

$R_5$ bis $R_7$ die obengenannte Bedeutung bzw. bevorzugte Bedeutung haben und

$R_8$ und $R_9$ für gleiche oder verschiedene Reste stehen und Wasserstoff, aliphatische Kohlenwasserstoffreste mit 1 bis 10, vorzugsweise 1 bis 4 Kohlenstoffatomen, cycloaliphatische Kohlenwasserstoffreste mit 5 bis 10, vorzugsweise 6 Kohlenstoffatomen, oder aromatische Kohlenwasserstoffreste mit 7 bis 15, vorzugsweise 7 Kohlenstoffatomen stehen, wobei die genannten Kohlenwasserstoffreste, insbesondere die genannten aliphatischen Kohlenwasserstoffreste gegebenenfalls Heteroatome wie Sauerstoff, Stickstoff oder Schwefel in Form von Ether-, Ester-, Amid-, Urethan-, Oxiran-, Keton-, Lactam-, Harnstoff-, Thioether-, Thioester- oder Lactongruppen aufweisen können oder wobei die Reste auch gegenüber Säureanhydridgruppen reaktionsfähige Hydroxyl- oder Aminogruppen aufweisen können.

Vorzugsweise weisen jedoch die als Komponente B) bzw. als erfindungswesentlicher Teil der Komponente

B) zum Einsatz gelangenden Hexahydropyrimidine bzw. Tetrahydroimidazole maximal eine gegenüber Säureanhydridgruppen reaktionsfähige Gruppierung auf. Dies bedeutet, daß vorzugsweise höchstens einer der Reste $R_8$ bzw. $R_9$ für Wasserstoff oder einen Rest steht, der gegenüber Säureanhydridgruppen reaktionsfähige Hydroxyl- bzw. Aminogruppen als Substituenten enthält. Besonders bevorzugt sind die Verbindungen gegenüber Säureanhydridgruppen in Abwesenheit von Feuchtigkeit inert, d.h. es liegen keine aktiven Wasserstoffatome bzw. gegenüber Säureanhydridgruppen reaktionsfähige Gruppen der genannten Art vor.

Die Herstellung derartiger, eine Hexahydropyrimidin- bzw. Tetrahydroimidazolgruppe aufweisenden Verbindungen gelingt in an sich bekannter Weise durch Umsetzung von entsprechenden Aldehyden bzw. Ketonen mit den entsprechenden Polyaminen.

Geeignete Aldehyde bzw. Ketone sind solche der allgemeinen Formel

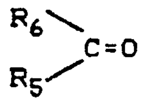 ,

die vorzugsweise ein Molekulargewicht von 72 bis 200 (Ketone) bzw. von 58 bis 128 (Aldehyde) aufweisen.

Geeignete Aldehyde bzw. Ketone sind beispielsweise Aceton, Methylethylketon, Methylpropylketon, Methylisopropylketon, Methyl-n-butylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Isophoron, Methyl-tert.-butylketon, 5-Methyl-3-heptanon, 4-Heptylketon, 1-Phenyl-2-propanon, Acetophenon, Methylnonylketon, 3,3,5-Trimethylcyclohexanon, Formaldehyd, Acetaldehyd, Propionaldehyd, Butyraldehyd, Isobutyraldehyd, Trimethylacetaldehyd, 2,2-Dimethylpropanol, 2-Ethylhexanal, 3-Cyclohexen-1-carboxaldehyd, Hexanal, Heptanal, Octanal, Valeraldehyd, Benzaldehyd, Tetrahydrobenzaldehyd, Hxahydrobenzaldehyd, Acrolein, Crotonaldehyd, Propargylaldehyd, p-Toluylaldehyd, 2-Methylpentanal, 3-Methylpentanal, Phenylethanal, 4-Methylpentanal.

Bevorzugte Aldehyde und Ketone sind Butyraldehyd, Isobutyraldehyd, Trimethylacetaldehyd, 2,2-Dimethylpropanal, 2-Ethylhexanal, Hexanal, 3-Cyclohexan-1-carboxaldehyd, Heptanal, Octanal, Hexahydrobenzaldehyd, 2-Methylpentanal, Cyclohexanon, Cyclopentanon, Methylisopropylketon, Aceton, 3,3,5-Trimethylcyclohexanon, Methylcyclohexanon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Komponente B) zum Einsatz gelangenden Polyaminen handelt es sich insbesondere um organische Verbindungen, die mindestens zwei primäre und/oder sekundäre Aminogruppen aufweisen.

Geeignete Polyamine sind beispielsweise solche der allgemeinen Formel

$$R_8\text{-NH-}R_7\text{-NH-}R_9,$$

in welcher

$R_7$, $R_8$ und $R_9$ die bereits obengenannte Bedeutung bzw. bevorzugte Bedeutung haben, wobei solche Polyamine besonders bevorzugt sind, bei welchen

$R_8$ und $R_9$ für gleiche oder verschiedene einfache Alkylreste wie Methyl-, Ethyl-, n-Propyl, iso-Propyl-, n-Butyl-, iso-Butyl-, tert.-Butyl-, n-Pentyl- oder n-Hexylreste stehen, oder wobei zumindest einer der Reste $R_8$ bzw. $R_9$ für einen Rest steht, wie er durch Anlagerung eines Wasserstoffatoms einer primären Aminogruppe an eine olefinisch ungesättigte Verbindung erhalten wird. Zur Herstellung derartiger, modifizierter Polyamine geeignete, olefinisch ungesättigte Verbindungen sind beispielsweise Derivate der (Meth)acrylsäure wie Ester, Amide, Nitrile oder z.B. Vinylaromaten wie Styrol, $\alpha$-Methylstyrol, Vinyltoluol oder z.B. Vinylester wie Vinylacetat, Vinylpropionat, Vinylbutyrat oder z.B. Vinylether wie Ethylvinylether, Propylvinylether, Butylvinylether oder Mono- und Diester der Fumarsäure, Maleinsäure oder Tetrahydrophthalsäure. Zu den bevorzugten Polyaminen der zuletzt genannten allgemeinen Formel gehören auch solche, bei welchen zumindest einer der Reste $R_8$ bzw. $R_9$ für eine primäre Aminoalkylgruppe mit 2 bis 4 Kohlenstoffatomen steht.

Ganz besonders bevorzugte Polyamine sind 1,2-Propylendiamin, 1,3-Propylendiamin, 1,2- und 1,3-Butylendiamin, Diethylentriamin, sowie die genannten Anlagerungsprodukte dieser Polyamine bzw. von Ethylendiamin an olefinisch ungesättigte Verbindungen.

Die N-substituierten Hexahydropyrimidine bzw. Tetrahydroimidazole sind durch eine cyclisierende Kondensation von Polyaminen der obengenannten Art mit Carbonylverbindungen der obengenannten Art unter Wasserabspaltung nach literaturbekannten Methoden zugänglich.

Üblicherweise wird dabei die Aminkomponente zusammen mit einem Schleppmittel vorgelegt und unter Rühren bei Raumtemperatur die Carbonylverbindung zugetropft. Anschließend wird am Wasserabscheider solange erhitzt, bis die theoretische Wassermenge abgeschieden ist, bzw. keine Wasserabscheidung mehr erfolgt. Anschließend wird das Schleppmittel und evtl. nicht umgesetztes Blockierungsmittel destillativ abgetrennt. Die so erhaltenen N-substituierten Hexahydropyrimidine bzw. Tetrahydroimidazole können ohne weiteren Reinigungsschritt eingesetzt werden. Falls besondere Anforderungen an die Reinheit gestellt werden, können auch destillative Reinigungsschritte unternommen werden. Geeignete Schleppmittel können z.B. Toluol, Xylol, Benzin, Cyclohexan, Octan, Methylenchlorid, Chloroform sein. Gegebenenfalls können saure Katalysatoren wie p-Toluolsulfonsäure, $AlCl_3$, HCl, $H_2SO_4$ zur Reaktionsbeschleunigung zugesetzt werden. Bei der Umsetzung werden die Polyamine und Carbonylverbindungen im allgemeinen unter Einhaltung eines Molverhältnisses von 1 : 1 bis 1 : 1,5 eingesetzt.

Bei der Herstellung der Hexahydropyrimidine bzw. Tetrahydroimidazole durch Umsetzung von Ketonen oder Aldehyden mit Diaminen der beispielhaft genannten Art, welche zwei primäre oder eine primäre und eine sekundäre Aminogruppe aufweisen – zu letzteren gehören nicht nur einfache primär-sekundäre Diamine sondern insbesondere auch Umsetzungsprodukte von diprimären Diaminen mit einfach olefinisch ungesättigten Verbindungen der beispielhaft genannten Art im Molverhältnis 1 : 1 – entstehen Hexahydropyrimidine bzw. Tetrahydroimidazole der obengenannten allgemeinen Formel, für welche $R_8$ und/ oder $R_9$ für Wasserstoff stehen. Bei Verwendung von solchen Polyaminen der zuletzt genannten allgemeinen Formel, für welche $R_8$ und/ oder $R_9$ eine primäre oder sekundäre Aminoalkylgruppe oder eine Hydroxyalkylgruppe stehen, entstehen Hexahydropyrimidine bzw. Tetrahydroimidazole der obengenannten allgemeinen Formel, für welche $R_8$ und-/oder $R_9$ entsprechende Substituenten aufweisende Alkylreste bedeuten. Alle diese Verbindungen mit aktiven Wasserstoffatomen können über die reaktionsfähigen Aminogruppen bzw. die Hydroxylgruppen weiteren Modifizierungsreaktionen zugeführt werden. Auf diese Weise können als erfindungsgemäße Komponente B) geeignete höherfunktionelle Hexahydropyrimidine bzw. Tetrahydroimidazole oder auch als Komponente B) ebenfalls geeignete Verbindungen erhalten werden, die neben mindestens einer Hexahydropyrimidin- bzw. Tetrahydroimidazolgruppe weitere blockierte Aminogruppen der oben bereits genannten Art enthalten. Für diese Modifizierungsreaktionen werden vorzugsweise solche Hexahydropyrimidine bzw. Tetrahydroimidazole der genannten allgemeinen Formel eingesetzt, für welche nur einer der Reste $R_8$ bzw. $R_9$ für Wasserstoff oder einen Amino- oder Hydroxyl-substituierten Alkylrest steht, und die im übrigen gegenüber den zu der Modifizierungsreaktion eingesetzten Reaktionspartnern inert sind.

Zur Herstellung dieser höherfunktionellen Verbindungen geeignete Reaktionspartner, d.h. "Modifizierungsmittel" sind insbesondere organische Polyisocyanate, Polyepoxide, Polycarbonsäuren, Polycarbonsäureanhydride, niedere Polycarbonsäureester, insbesondere Methylester oder Verbindungen, welche mindestens zwei olefinisch ungesättigte, mit sekundären Aminen im Sinne einer Additionsreaktion reagierende Doppelbindungen aufweisen.

Für diese Modifizierungsreaktion geeignete Polyisocyanate sind beispielsweise aliphatische, cycloaliphatische, araliphatische, aromatische oder heterocyclische Polyisocyanate, wie sie z.B. von W.Siefken in Justus Liebigs Annalen der Chemie, 562, S.75 bis 136 beschrieben werden, beispielsweise 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethyl-cyclohexan, 2,4- und 2,6-Hexahydrotoluylendiisocyanat, Hexahydro-1,3- und -1,4-phenylen-diisocyanat, Perhydro-2,4'- und/oder -4,4'-diphenylmethandiisocyanat, 1,3-Phenylendiisocyanat, 1,4-Phenylendiisocyanat, 2,4-Toluylendiisocyanat, 2,6-Toluylendiisocyanat, Diphenylmethan-2,4'- und/oder -4,4'-diisocyanat, Naphthylen-1,5-diisocyanat, Gemische dieser und anderer Polyisocyanate, Polyisocyanate mit Carbodiimidgruppen (z.B. DE-PS 10 92 007), Polyisocyanate mit Allophanatgruppen (z.B. GB-PS 994 890), Isocyanuratgruppen aufweisende Polyisocyanate (z.B. DE-PS 10 22 789, DE-PS 12 22 067), Urethangruppen aufweisende Polyisocyanate (z.B. US-PS 33 94 164) oder durch Umsetzung von mindestens difunktionellen Hydroxyverbindungen mit überschüssigen, mindestens difunktionellen Isocyanaten hergestellten Polyisocyanate, Biuretgruppen aufweisende Polyisocyanate (z.B. DE-PS 11 01 394) und präpolymere bzw. polymere Substanzen mit mindestens zwei Isocyanatgruppen.

Vertreter dieser erfindungsgemäßen zu verwendenden Verbindungen sind z.B. in High Polymers, Vol XVI, "Polyurethans, Chemistry and Technology" Interscience Publishers, New York, London, Band I, 1962, S. 32-42 bzw. 45-54 und Band II, 1964, S. 5-6 und 198-199, sowie im Kunststoffhandbuch, Band VII, Vieweg-Höchtlen, Carl-Hanser-Verlag, München, 1966, S. 45-71, beschrieben.

Für die genannte Modifizierungsreaktion genannte Polyepoxide sind beispielsweise aliphatische, cycloaliphatische, araliphatische, aromatische und heterocyclische, mindestens zwei Epoxidgruppen enthaltende Substanzen, wie z.B. epoxidierte Ester aliphatischer polybasischer Säuren mit ungesättigten einwertigen Alkoholen, Glycidylether von Polyhydroxyverbindungen, Glycidylester von Polycarbonsäuren, epoxidgruppen-

haltige Copolymerisate.

Für die Modifizierungsreaktion geeignete Polycarbonsäuren sind beispielsweise aliphatische, cycloaliphatische, araliphatische, aromatische und heterocyclische, mindestens zwei Carboxylgruppen enthaltende Substanzen, wie z.B. Adipinsäure, Dimerfettsäure, Phthalsäure, Terephthalsäure, Isophthalsäure, Fumarsäure, Maleinsäure, Bernsteinsäure, Trimellithsäure, Pyromellitsäure, (Meth)-acrylsäure-haltige Copolymerisate, saure Polyester oder saure Polyamide.

Anstelle der beispielhaft genannten Säuren können auch die entsprechenden Säureanhydride (sofern es sich um intramolekulare Anhydride bildende Säuren handelt) oder die entsprechenden einfachen Alkylester, insbesondere Methylester für die Modifizierungsreaktion eingesetzt werden.

Für die Modifizierungsreaktion geeignete Verbindungen mit mindestens zwei olefinischen Doppelbindungen der genannten Art sind insbesondere Derivate der Acrylsäure bzw. Methacrylsäure wie beispielsweise Hexandiol-bis-(meth)acrylsäureester, Trimethylolpropan-tris-(meth)acrylsäureester, Pentaerythrittetra(meth)acrylsäureester, OH-funktionelle Polyester bzw. Polyacrylate, die mit Acrylsäure verestert sind, Diethylenglykoldimethacrylsäureester, Umsetzungsprodukte von Polyepoxiden mit (Meth)acrylsäure oder Umsetzungsprodukte von Polyisocyanaten mit Hydroxyalkyl(meth)acrylat.

Bei der Modifizierungsreaktion zur Herstellung von höherfunktionellen Komponenten B) können nicht nur aktive Wasserstoffatome aufweisende Hexahydropyrimidine bzw. Tetrahydroimidazole der obengenannten Art bzw. Gemische verschiedener derartiger Verbindungen eingesetzt werden, es ist vielmehr auch möglich, Gemische dieser Verbindungen mit anderen blockierten Polyaminen einzusetzen, die mindestens eine freie, mit dem Modifizierungsmittel reaktionsfähige Hydroxyl- oder Aminogruppe aufweisen. Hierzu gehören insbesondere eine Hydroxy- bzw. eine primäre oder sekundäre Aminogruppe aufweisende Ketimine, Aldimine oder Oxazolane.

Ketimin- bzw. Aldimingruppen haltige Polyamine, die noch mindestens eine freie primäre bzw. sekundäre Aminogruppe aufweisen, erhält man z.B. durch Umsetzung von mindestens difunktionellen Aminen mit solchen Ketonen und/oder Aldehyden, die bereits weiter oben bei der Herstellung der Hexahydropyrimidine bzw. Tetrahydroimidazole beschrieben werden, in solchen Äquivalentverhältnissen, daß mindestens eine Aminogruppe frei bleibt. Geeignete Polyamine können sein : diprimäre aliphatische bzw. cycloaliphatische Diamine wie z.B. Tetramethylendiamin, Hexamethylendiamin, Isophorondiamin, Bis-(4-aminocyclohexyl)-methan, Bis-aminomethyl-hexahydro-4,7-methanoindan, 1,4-Cyclohexandiamin, 1,3-Cyclohexandiamin, 2-Methylcyclohexandiamin, 4-Methylcyclohexandiamin, 2,2,5-Trimethyl-1,6-hexandiamin, 2,2,4-Butandiol-bis-(3-aminopropyl)-ether, 2,5-Diamino-2,5-dimethylhexan, Bis-1,4-aminomethylcyclohexan, Bis-(4-amino-3,5-dimethylcyclohexyl)-methan.

Auch bei der Verwendung von beispielsweise solchen Polyaminen, die neben zwei primären Aminogruppen mindestens eine sekundäre Aminogruppe aufweisen entstehen bei der Umsetzung mit Aldehyden oder Ketonen Aldimine bzw. Ketimine, die mindestens eine freie sekundäre Aminogruppe aufweisen (falls unter Einhaltung eines Äquivalentverhältnisses von primären Aminogruppen zu Carbonylgruppen von 1 : 1 gearbeitet worden ist), bzw. die neben mindestens einer sekundären Aminogruppe noch freie primäre Aminogruppen enthalten (falls die Carbonylverbindungen, bezogen auf die primären Aminogruppen, im Unterschuß verwendet worden sind). Derartige primär-sekundäre Polyamine sind beispielsweise Diethylentriamin, Triethylentetramin, Tetraethylenpentamin, Dipropylentriamin, Tripropylentetramin.

Für die Herstellung der Ald- bzw. Ketimine können auch primäre Aminogruppen aufweisende Prepolymere eingesetzt werden, d.h. Verbindungen, die mindestens zwei endständige Aminogruppen und ein Molekulargewicht von bis zu 5000 aufweisen. Zu diesen Verbindungen gehören beispielsweise die aus der Polyurethanchemie an sich bekannten Aminopolyether, wie sie z.B. in der EP-A-0081701 beschrieben werden, oder z.B. Amid-, Urethan-, Harnstoffgruppen-haltige Umsetzungsprodukte von mindestens difunktionellen Carbonsäuren, Isocyanaten oder Epoxiden mit Polyaminen, wobei die Umsetzungsprodukte mindestens zwei Aminogruppen aufweisen müssen, von denen mindestens eine eine primäre Aminogruppe darstellt.

Die Herstellung der Ketimin- bzw. Aldimingruppen, sowie noch mindestens eine reaktive nicht blockierte primäre bzw. sekundäre Aminogruppe aufweisenden Polyamine erfolgt durch Umsetzung der genannten Ausgangskomponenten unter Einhaltung eines solchen Äquivalentverhältnisses von Aminogruppen zu Aldehyd- bzw. Ketogruppen, daß mindestens eine primäre bzw. sekundäre Aminogruppe nicht blockiert wird. Die Umsetzung erfolgt im allgemeinen bei Temperaturen von 75 bis 180°C, wobei die Reaktion in Gegenwart eines Schleppmittels so lange durchgeführt wird, bis die berechnete Menge an Wasser abgespalten ist, bzw. bis kein Wasser mehr abgeschieden wird.

Oxazolangruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die neben einer Hydroxygruppe und einer sekundären Aminogruppe noch mindestens eine weitere Hydroxygruppe und/oder primäre bzw. sekundäre Aminogruppe aufweisen, oder durch Umsetzung von geeigneten Hydroxyaminen mit einer Hydroxygruppe und einer primären Aminogruppe in geeigneten Äquivalentverhältnissen mit

Ketonen und/oder Aldehyden, wie sie z.B. weiter oben bei der Herstellung der Hexahydropyrimidine bzw. Tetrahydroimidazole beschrieben werden. Geeignete Hydroxyamine können z.B. sein : Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(6-hydroxyhexyl)-amin, 2-Amino-2-methyl-1-propanol, 2-Amino-2-ethyl-1-propanol, 2-Amino-2-propyl-1-propanol, 2-Amino-2-methyl-1,3-propandiol, 2-Amino-3-methyl-3-hydroxybutan, Aminoethanol.

Die Herstellung der Oxazolangruppen enthaltenden Hydroxyamine, die noch mindestens eine freie primäre bzw. sekundäure Aminogruppe bzw. eine Hydroxygruppe aufweisen, erfolgt durch Umsetzung der genannten Ausgangskomponenten unter Einhaltung eines solchen Äquivalentverhältnisses von Amino- bzw. Hydroxygruppen zu Aldehyd- bzw. Ketongruppen, daß mindestens eine primäre bzw. sekundäre Aminogruppe bzw. eine Hydroxygruppe nicht blockiert wird und für die anschließende Umsetzung mit dem als Modifizierungsmittel verwendeten Reaktionspartner zur Verfügung steht.

Die Herstellung von Oxazolanen durch Umsetzung von Hydroxylaminen und Carbonylverbindungen ist literaturbekannt, sie erfolgt im allgemeinen bei Temperaturen von 60 bis 180°C, wobei die Reaktion in Gegenwart eines Schleppmittels so lange durchgeführt wird, bis die berechnete Menge an Wasser abgespalten ist, bzw. bis keine Wasserabscheidung mehr erfolgt.

Falls die oben beispielhaft genannten "Modifizierungsmittel" mit aktive Wasserstoffatome aufweisenden Hexahydropyrimidinen bzw. Tetrahydroimidazolen umgesetzt werden, entstehen höherfunktionelle Hexahydropyrimidine bzw. Tetrahydroimidazole. Falls die Modifizierungsmittel jedoch mit Gemischen aus (i) Hexahydropyrimidinen bzw.

Tetrahydroimidazolen mit aktiven Wasserstoffatomen und (ii) Aldiminen, Ketiminen und/oder Oxazolanen der beispielhaft genannten Art umgesetzt werden, entstehen modifizierte Hexahydropyrimidine bzw. Tetrahydroimidazole, die mit Aldimin-, Ketimin- oder Oxazolangruppen chemisch verknüpft sind. Im erstgenannten Fall handelt es sich somit um Hexahydropyrimidine bzw. Tetrahydroimidazole der obengenannten allgemeinen Formel, für welche mindestens einer der Reste $R_8$ bzw. $R_9$ für einen, mindestens eine weitere Hexahydropyrimidin- und/oder Tetrahydroimidazolgruppe als Substituenten aufweisenden Rest steht. Im letztgenannten Fall handelt es sich um solche Hexahydropyrimidine bzw. Tetrahydroimidazole der genannten allgemeinen Formel, für welche mindestens einer der Reste $R_8$ bzw. $R_9$ mindestens eine Aldimin-, Ketimin- und/oder Oxazolangruppe als Substituenten aufweisenden Rest steht. Falls bei der Modifizierungsreaktion die Aldimine, Ketimine und/oder Oxazolane der beispielhaft genannten Art, bezogen auf die Menge der Hexahydropyrimidine bzw. Tetrahydroimidazole, mit aktiven Wasserstoffatomen im Überschuß eingesetzt werden, entstehen Gemische von blockierten Polyaminen, die nur zum Teil Hexahydropyrimidin- bzw. Tetrahydroimidazolgruppen aufweisen. Hiermit erklärt sich die oben getroffene Feststellung, daß die Komponente B) auch aus Gemischen von blockierten Polyaminen bestehen kann, die im statistischen Mittel pro Molekül weniger als eine Hexahydropyrimidin- bzw. Tetrahydroimidazolgruppe aufweisen. Durch die genannten Modifizierungsreaktionen können somit die unterschiedlichsten, als Komponente B) geeigneten Verbindungen bzw. Gemische von Verbindungen erhalten werden. Modifizierte, als erfindungsgemäße Komponente B) geeignete Hexahydropyrimidine bzw. Tetrahydroimidazole können auch auf anderem Wege erhalten werden, beispielsweise unter Verwendung von Polyaminen der zuletzt genannten allgemeinen Formel, für welche einer der Reste $R_8$ oder $R_9$ für eine Aminoalkylgruppe steht (beispielsweise Diethylentriamin) und solchen Mengen an Aldehyden bzw. Ketonen, die über die für die Bildung der Hexahydropyrimidin- bzw. Tetrahydroimidazol-Bildung erforderliche Menge hinausgehen, so daß neben den Hexahydropyrimidin- bzw. Tetrahydroimidazolgruppen in einem Eintopfverfahren noch weitere blockierte Aminogruppen, beispielsweise Ketimin- bzw. Aldimingruppen gebildet werden.

Die Modifizierungsreaktion wird üblicherweise in einem Lösungsmittel der oben beispielhaft genannten Art bei Reaktionstemperaturen von 30 bis 180°C, gegebenenfalls am Wasserabscheider, durchgeführt.

Dabei wird in der Regel ein äquivalentes Verhältnis von reaktionsfähigen Gruppen der blockierten Polyamine zu den reaktionsfähigen Gruppen des "Modifizierungsmittels" gewählt. Es ist jedoch auch möglich, die "Modifizierungsmittel" im Unterschuß, etwa unter Verwendung von 0,75 bis 0,99-fach äquivalenten Mengen einzusetzen.

Falls bei der Modifizierungsreaktion neben den Hexahydropyrimidinen bzw. Tetrahydroimidazolen weitere blockierte Polyamine der beispielhaft genannten Art mit gegenüber dem "Modifizierungsmittel" reaktionsfähigen Gruppen verwendet werden geschieht dies maximal in solchen Mengen, daß in dem resultierenden, modifizierten Umsetzungsprodukt im statistischen Mittel auf jede Hexahydropyrimidin- bzw. Tetrahydroimidazolgruppe maximal 50, vorzugsweise maximal 10 Aldimin-, Ketimin- und/oder Oxazolangruppen entfallen.

Durch die genannten Modifizierungsreaktionen zugängliche, als Komponente B) geeignete, modifizierte Hexahydropyrimidine bzw. Tetrahydroimidazole sind beispielsweise Verbindungen der Formeln :

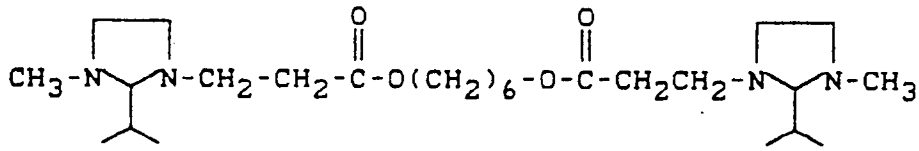

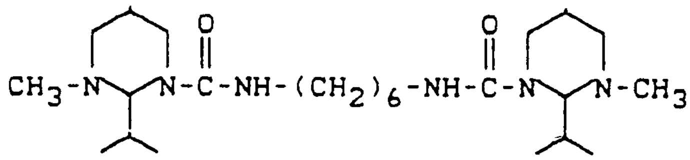

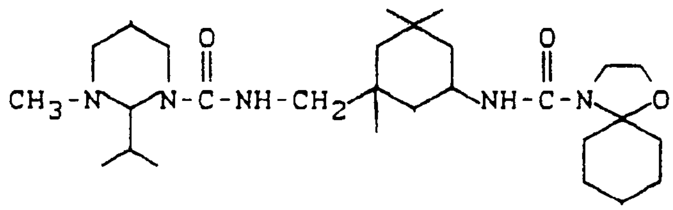

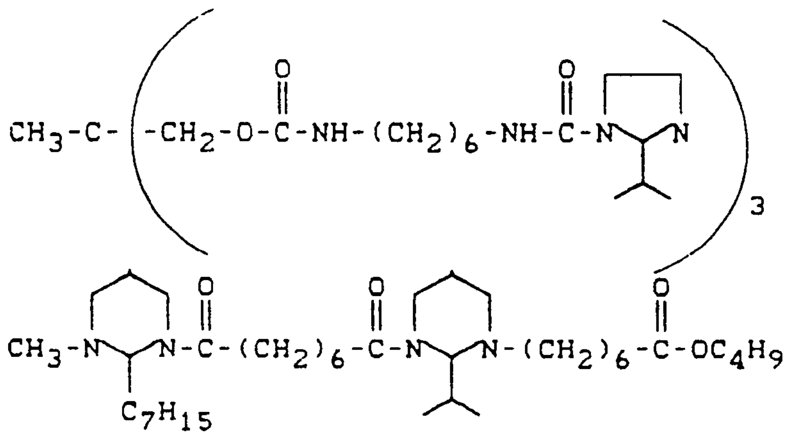

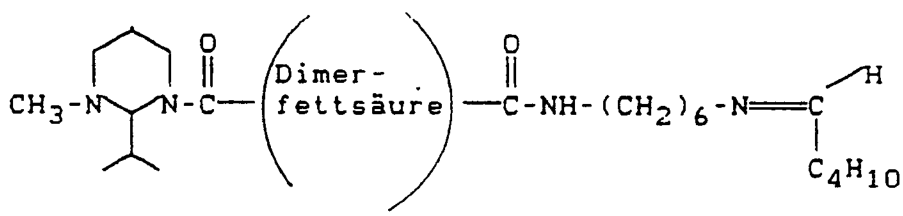

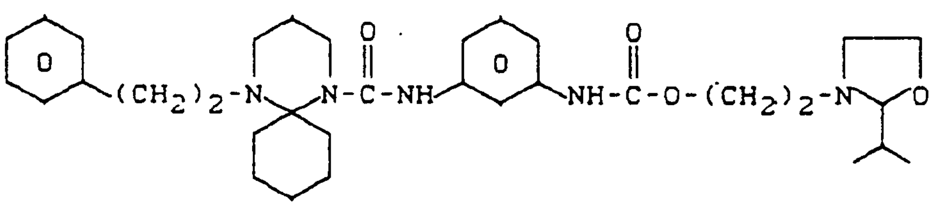

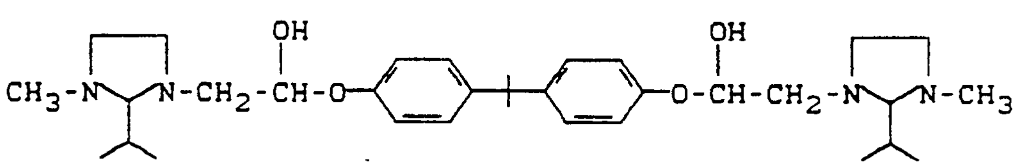

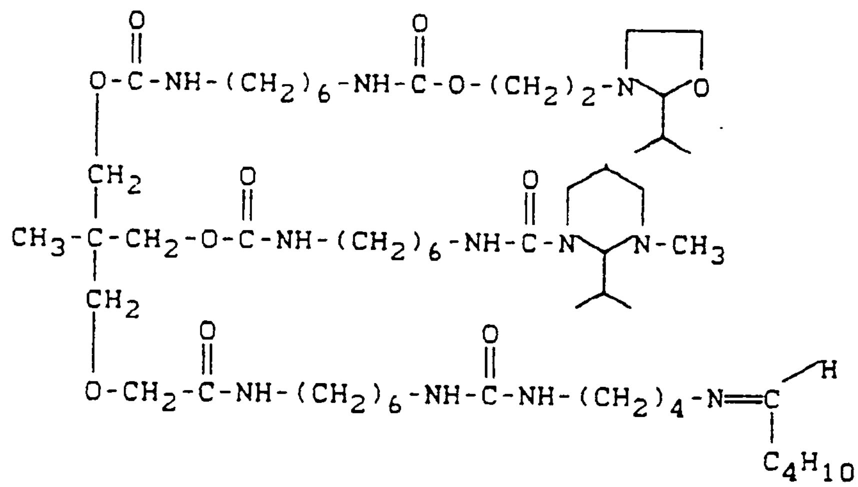

Bei der Durchführung des erfindungsgemäßen Verfahrens können als Hilfs- bzw. Zusatzstoffe, gegebenenfalls neben weiteren Hilfs- und Zusatzstoffen, auch weitere, Hexahydropyrimidin- bzw. Tetrahydroimidazolgruppen-freie blockierte Polyamine mitverwendet werden. Hierbei handelt es sich insbesondere um Aldimine, Ketimine oder Oxazolane, die mit den erfindungswesentlichen Hexahydropyrimidinen bzw. Tetrahydroimidazolen nicht chemisch verknüpft sind. Es können sowohl Hydroxyl- oder Aminogruppen aufweisende derartige Verbindungen der oben beispielhaft genannten Art als auch gegenüber Säureanhydridgruppen in Abwesenheit von Feuchtigkeit inerte derartige Verbindungen eingesetzt werden. Die Herstellung dieser Hilfs- und Zusatzstoffe erfolgt entsprechend den obengemachten Ausführungen, wobei jedoch Art un Mengenverhältnisse der zur Herstellung der blockierten Amine verwendeten Ausgangsmaterialien so gewählt werden, daß keine freien Hydroxyl- bzw. primäre oder sekundäre Aminogruppen mehr vorliegen.

Die Mitverwendung von derartigen Hilfs- und Zusatzstoffen beim erfindungsgemäßen Verfahren erfolgt allenfalls in solchen Mengen, daß in den letztendlich erhaltenen erfindungsgemäßen Bindemittelkombinationen mindestens 2, vorzugsweise mindestens 10 Mol-% der blockierten Aminogruppen Hexahydropyrimidin- bzw. Tetrahydroimidazolgruppen darstellen, wobei sowohl diese in der Komponente B) vorliegenden Gruppen als auch die anderen in der Komponente B) gegebenenfalls vorliegenden blockierten Aminogruppen als auch die in Form von Hilfs- und Zusatzstoffen der zuletzt genannten Art eingebrachten blockierten Aminogruppen in die Berechnung eingehen.

Die Durchführung des erfindungsgemäßen Verfahrens erfolgt dergestalt, daß man die Ausgangskomponenten A) und B), sowie die gegebenenfalls mitzuverwendenden Hilfs- und Zusatzstoffe miteinander vermischt, wobei vor, während oder nach der Herstellung der Mischungen der Einzelkomponenten inerte organische Lösungs- bzw. Verdünnungsmittel der oben bereits beispielhaft genannten Art zugegen sein können. Gegebenenfalls können diese Lösungs- bzw. Verdünnungsmittel auch schon während der Herstellung einer oder mehrerer Ausgangskomponenten zugegen sein, wie dies z.B. vorstehend bei der Herstellung der bernsteinsäureanhydridhaltigen Copolymerisate beschrieben ist. Weitere geeignete Lösungs- bzw. Verdünnungsmittel zur Herstellung der Bindemittelkombination können z.B. Alkohole sein, welche in bestimmten Fällen die Eigenschaften der Bindemittelkombinationen positiv beeinflußen. Geeignet sind z.B. Ethanol, n-Propanol, iso-Propanol, n-Butanol, sec. Butanol, tert.-Butanol, n-Pentanol, iso-Pentanol, n-Hexanol, iso-Hexanol, Cyclopentanol, Cyclohexanol, Heptanol, Octanol, Methylglykol, Ethylglykol, Propylglykol, Isopropylglykol, Butylglykol, Methyldiglykol, Ethyldiglykol, Propyldiglykol, Butyldiglykol, Methyltriglykol, Hexylglykol, Propylenglykolmonomethylether, Tripropylenglykolmonomethylether, Dipropylenglykolmonomethylether, Glykolsäurealkylester, Milchsäurealkylester, 2-Ethylbutanol, 2-Ethylhexanol, 3-Methoxybutanol, Diacetonalkohol, Furfurylalkohol, Tetrahydrofurfurylalkohol. Die Lösungs- bzw. Verdünnungsmittel sollten weitgehend wasserfrei sein, um eine ausreichende Verarbeitungszeit der Gemische sicherzustellen. Lösungs- bzw. Verdünnungsmittel werden im allgemeinen in solchen Mengen mitverwendet, die zur Einstellung von geeigneten Verarbeitungsviskositäten der erfindungsgemäßen Kombinationen erforderlich sind. Der Festgehalt der der erfindungsgemäßen Verwendung zuzuführenden erfindungsgemäßen Kompositionen liegt in der Regel zwischen 20 und 90 Gew.-%. Durch Verwendung geeigneter niedermolekularer bernsteinsäureanhydridhaltiger Copolymerisate ist es jedoch auch prinzipiell möglich, den Lösungs- bzw. Verdünnungsmittelgehalt noch weiter zu reduzieren.

Gemäß einer bevorzugten Ausführungsform des erfindungsgemäßen Verfahrens werden als alleinige blockierte Polyamine Verbindungen B) eingesetzt, die keine in Abwesenheit von Feuchtigkeit gegenüber Anhy-

dridgruppen reaktionsfähige Gruppen aufweisen, und deren blockierte Aminogruppen ausschließlich aus Hexahydropyrimidin- und/oder Tetrahydroimidazolgruppen der genannten Art bestehen. Die bevorzugten, so hergestellten erfindungsgemäßen Kompositionen enthalten 45 bis 90 Gew.-Teile an Polyanhydriden A) und 10 bis 55 Gew.-Teile Hexahydropyrimidin- bzw. Tetrahydroimidazolgruppen aufweisende Verbindungen B).

Falls als Komponente B) Hexahydropyrimidine oder Tetrahydroimidazole bzw. als Hilfs- und Zusatzmittel mit blockierten Aminogruppen Verbindungen eingesetzt werden, die in Abwesenheit von Feuchtigkeit gegenüber Säureanhydridgruppen reaktionsfähige Gruppen, d.h. insbesondere Hydroxyl-, primäre oder sekundäre Aminogruppen enthalten, resultieren als Verfahrensprodukte komplexe Gemische, in denen Amid- oder Estergruppen aufweisende Umsetzungsprodukte der Copolymerisate A) mit den reaktionsfähigen Verbindungen B) bzw. den reaktionsfähigen, als Hilfs- bzw. Zusatzstoff mitverwendeten blockierten Polyaminen. Neben diesen Umsetzungsprodukten können in den erhaltenen Verfahrensprodukten auch noch überschüssige, nicht umgesetzte Copolymerisate A) oder gegebenenfalls mitverwendete, gegenüber Säureanhydridgruppen inerte blockierte Polyamine vorliegen. Bei den genannten, Amid- oder Estergruppen aufweisenden Umsetzungsprodukten kann es sich sowohl um blockierte Aminogruppen aufweisende Umsetzungsprodukte (Umsetzungsprodukte aus Copolymerisaten A) mit Hexahydropyrimidinen, Tetrahydroimidazolen, Aldiminen, Ketiminen oder Oxazolanen mit chemisch gebundenen aktiven Wasserstoffatomen) als auch um Umsetzungsprodukte handeln, die keine blockierten Aminogruppen aufweisen (Umsetzungsprodukte von Copolymerisaten A) mit gegebenenfalls im Gemisch mit den blockierten Polyaminen vorliegenden Polyaminen oder Hydroxylaminen der zu ihrer Herstellung eingesetzten Art). Unter "gegenüber Säureanhydridgruppen reaktionsfähige Wasserstoffatome aufweisenden, blockierten Polyaminen" sollen nämlich im Rahmen der Erfindung nicht nur solche blockierten Polyamine zu verstehen sein, die reaktionsfähige Wasserstoffatome in chemisch gebundener Form enthalten, sondern vielmehr auch solche, die im Gemisch mit überschüssigem, zu ihrer Herstellung eingesetztem Polyamin bzw. Hydroxyamin vorliegen.

Bei allen Varianten der Durchführung des erfindungsgemäßen Verfahrens werden im übrigen Art und Mengenverhältnisse der Einzelkomponenten so gewählt, daß unter Einbeziehung der evtl. spontan zwischen Säureanhydridgruppen und gegenüber Säureanhydridgruppen reaktionsfähigen Gruppen, insbesondere Amino- bzw. Hydroxylgruppen ablaufenden Reaktion in den letztendlich erhaltenen Bindemittelkombinationen für jede Hexahydropyrimidin- bzw. Tetrahydroimidazolgruppe 0,25 bis 50, vorzugsweise 0,5 bis 10 und besonders bevorzugt 0,6 bis 5 Anhydridgruppen vorliegen. Ein verhältnismäßig hoher Überschuß an Anhydridgruppen gegenüber den genannten blockierten Aminogruppen ist dann angezeigt, wenn diese zusammen mit anderen blockierten Aminogruppen der genannten Art vorliegen. Vorzugsweise liegt das Molverhältnis von Säureanhydridgruppen zu allen blockierten Aminogruppen nach Beendigung der gegebenenfalls spontan ablaufenden Reaktion zwischen Säureanhydridgruppen und gegenüber Säureanhydridgruppen reaktionsfähigen Gruppen bei 0,5 : 1 bis 2 : 1.

Bezüglich der Verwendbarkeit der erfindungsgemäßen Verfahrensprodukte ist es weitgehend ohne Bedeutung, ob die gegebenenfalls spontan ablaufende Reaktion zwischen den Copolymerisaten A) und den gegenüber Säureanhydridgruppen reaktionsfähigen Gruppen bereits vollständig zum Abschluß gekommen ist. Gewünschtenfalls ist es jedoch möglich, diese Reaktion vor der erfindungsgemäßen Verwendung der Verfahrensprodukte durch kurzzeitiges Erhitzen auf 40 bis 100°C zum Abschluß zu bringen. Im übrigen erfolgt die Durchführung des erfindungsgemäßen Verfahrens vorzugsweise bei Raumtemperatur.

Bei der Durchführung des erfindungsgemäßen Verfahrens können selbstverständlich jeweils beliebige Gemische unterschiedlicher Einzelkomponenten A) und B) zur Anwendung gelangen.

Die erfindungsgemäßen Verfahrensprodukte sind im allgemeinen bei Raumtemperatur flüssig, sie sind in Abwesenheit von Wasser ausreichend lagerstabil und härten nach Applikation auf ein Substrat in Gegenwart von Luftfeuchtigkeit im allgemeinen rasch aus.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130°C und Trocknungszeiten von 10 bis 30 Minuten vorteilhaft.

Bei Verwendung von besonders hydrolysestabilen blockierten Aminogruppen kann diese forcierte Trocknung bei höheren Temperaturen erforderlich sein, um das optimale Eigenschaftsbild zu erhalten.

Die der erfindungsgemäßen Verwendung zuzuführenden, die erfindungsgemäßen Verfahrensprodukte als Bindemittel enthaltenden Lacke und Beschichtungsmassen können die in der Lacktechnologie üblichen Hilfs- und Zusatzstoffe, wie beispielsweise Pigmente, Füllstoffe, Verlaufshilfsmittel, Antioxidantien oder UV-Absorber enthalten.

Diese Hilfs- und Zusatzstoffe sollten möglichst wasserfrei sein und werden vorzugsweise bereits vor der Durchführung des erfindungsgemäßen Verfahrens den Ausgangskomponenten im allgemeinen der Komponenten A) einverleibt.

Die, die erfindungsgemäßen Verfahrensprodukte als Bindemittel enthaltenden Lacke und Beschichtungsmassen weisen in Abwesenheit von Feuchtigkeit im allgemeinen eine Topfzeit von 1 bis 24 Stunden auf. Durch Auswahl geeigneter Reaktionspartner kann die Topfzeit jedoch beliebig nach oben oder unten korrigiert werden. Die Lacke und Beschichtungsmassen können nach den üblichen Methoden, beispielsweise durch Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe oder Papier aufgetragen werden.

In den nachfolgenden Beispielen beziehen sich alle Prozentzahlen und -teile falls nicht anders vermerkt, auf das Gewicht.

## Beispiele

### I) Herstellung der Maleinsäureanhydridcopolymerisate A

Allgemeine Herstellvorschrift für Maleinsäureanhydridcopolymerisate $A_1$ bis $A_4$ :

In einem 4-l-Reaktionsgefäß mit Rühr-, Kühl- und Heizvorrichtung wird Teil I vorgelegt, auf Reaktionstemperatur aufgeheizt und in 3 Stunden Teil II und Teil III und in 4 Stunden Teil IV zudosiert. Anschließend wird noch 2 Stunden bei Reaktionstemperatur nachgerührt und gegebenenfalls kurz andestilliert.

Die Reaktionstemperaturen und die Zusammensetzung der Teile I bis IV sind in Tabelle 1, zusammen mit Festgehalt und Viskosität der erhaltenen Maleinsäureanhydridcopolymerisatlösungen aufgeführt.

Tabelle 1 (Mengenangaben in g)

| | $A_1$ | $A_2$ | $A_3$ | $A_4$ |
|---|---|---|---|---|
| Teil I | | | | |
| Methoxypropylacetat | 1200 | 900 | | |
| Butylacetat | | | 1248 | 1254 |
| Teil II | | | | |
| Maleinsäureanhydrid | 375 | 200 | 262,5 | 127,5 |
| Teil III | | | | |
| Ethylhexylacrylat | 675 | 100 | 97,5 | |
| Styrol | 450 | 50 | 300 | 225 |
| Methylmethacrylat | | 100 | | 225 |
| Vinyltoluol | | 50 | 75 | |
| α-Methylstyrol | | 150 | | |
| Ethylacrylat | | 350 | 90 | 450 |
| Butylacrylat | | | 525 | 322,5 |
| Butylvinylether | | | 150 | |
| Acrylnitril | | | | 75 |
| n-Dodecylmercaptan | 1,5 | 20 | 7,5 | |
| Vinylacetat | | | | 75 |
| Teil IV | | | | |
| tert.-Butylperoctoat 1) | 42,9 | 29 | 53,6 | 53,6 |
| Methoxypropylacetat | 40,1 | 100 | | |
| Reaktionstemperatur (°C) | 130 | 120 | 125 | 120 |
| Festgehalt (%) | 58,9 | 50,3 | 56,7 | 57,0 |
| Viskosität (mPa.s) 2) | 32900 | 790 | 904 | 1190 |

1) tert.-Butylperoctoat wird 70 %ig gelöst in Kohlenwasserstoffgemisch eingesetzt.
2) gemessen bei 23° C.

Allgemeine Herstellvorschrift für die Maleinsäureanhydridcopolymerisate $A_5$ bis $A_{11}$ :

In einem 4-l-Reaktionsgefäß mit Rühr-, Kühl- und Heizvorrichtung wird Teil I vorgelegt, auf Reaktionstemperatur aufgeheizt und in 4 Stunden Teil II und in 5 Stunden Teil III zudosiert. Nach 1 Stunde Nachrühren werden im Abstand von 15 Minuten Teil IV und Teil V zugegeben und dann nochmals 1 Stunde gerührt.

Die Reaktionstemperaturen und die Zusammensetzung der Teile I bis V sind in Tabelle 2, zusammen mit Festgehalt und Viskosität der erhaltenen Maleinsäureanhydridcopolymerisatlösungen aufgeführt.

Tabelle 2 (Mengenangaben in g)

| | $A_5$ | $A_6$ | $A_7$ | $A_8$ | $A_9$ | $A_{10}$ | $A_{11}$ |
|---|---|---|---|---|---|---|---|
| **Teil I** | | | | | | | |
| Methoxypropylacetat | 731 | | | | | | |
| Butylacetat | | 725 | 447 | 642 | 975 | 798 | 1232 |
| **Teil II** | | | | | | | |
| Maleinsäureanhydrid | 120 | 352 | 440 | 396 | 264 | 425 | 187,5 |
| Styrol | 180 | 264 | 330 | 308 | 220 | 350 | 169 |
| Butylacrylat | 900 | 836 | 836 | 1496 | 836 | 1050 | 431 |
| Methylmethacrylat | 300 | 748 | 594 | | 880 | 675 | 425 |
| Butylacetat | | 1056 | 1320 | 1188 | 792 | 1275 | |
| Methoxypropylacetat | 280 | | | | | | |
| **Teil III** | | | | | | | |
| tert.-Butyl-peroctoat[1]) | 64,3 | 63,0 | 110 | 110 | 110 | 98 | 53,5 |
| **Teil IV** | | | | | | | |
| tert.-Butyl-peroctoat[1]) | 2,1 | 3,1 | 3,1 | 3,1 | 3,1 | 3,6 | 1,8 |
| **Teil V** | | | | | | | |
| tert.-Butylperoctoat[1]) | 2,1 | 3,1 | 3,1 | 3,1 | 3,1 | 3,6 | 1,8 |
| Reaktionstemperatur (°C) | 126 | 128 | 128 | 125 | 127 | 126 | 124 |
| Festgehalt (%) | 61,0 | 55,1 | 55,3 | 54,6 | 56,0 | 56,4 | 48,8 |
| Viskosität (mPa.s)[2]) | 2220 | 4540 | 2090 | 421 | 1313 | 1090 | 971 |

1) tert.-Butylperoctoat wird 70 %ig gelöst in Kohlenwasserstoffgemisch eingesetzt.
2) gemessen bei 23°C.

II) Herstellung der Hexahydropyrimidin- bzw. Tetrahydroimidazolgruppen enthaltenden Vernetzer B)

Alle Umsetzungen wurden unter $N_2$ Atmosphäre durchgeführt.

$B_1$

In einem 1-l-Reaktionsgefäß mit Rühr-, Kühl- und Heizvorrichtung werden 60 g Ethylendiamin vorgelegt. 128 g n-Butylacrylat werden zugetropft, wobei die Temperatur auf 80°C ansteigt. Nach 6 Stunden Rühren bei 80°C wird auf 40°C abgekühlt, 69 g Cyclohexan und 86,4 g Isobutyraldehyd zugegeben und wieder auf Rückflußtemperatur aufgeheizt. Anschließend werden 22 g Wasser azeotrop abgeschieden und dann Lösungsmittel bzw. überschüssiges Blockierungsreagenz abdestilliert. Man erhält so das rohe Tetrahydroimidazol $B_1$.

$B_2$

In einem 1-l-Reaktionsgefäß mit Rühr-, Kühl- und Heizvorrichtung werden 171 g Cyclohexan und 235,2 g Cyclohexanon eingewogen. Unter Eisbadkühlung (~10°C) werden dann 176 g 1-Amino-3-(methylamino)-propan langsam zugetropft. Anschließend wird noch 1 Stunde bei 10°C gehalten, dann auf Rückflußtemperatur aufgeheizt und 34 g Wasser azeotrop abgeschieden. Lösungsmittel und überschüssiges Blockierungsmittel werden abdestilliert und man erhält das rohe Hexahydropyrimidin $B_2$.

$B_3$

In einem 1-l-Reaktionsgefäß mit Rühr-, Kühl- und Heizvorrichtung werden 60 g Ethylendiamin vorgelegt. 100 g Methylmethacrylat werden zugetropft, wobei die Temperatur auf 80°C ansteigt. Nach 6 Stunden Rühren bei 80°C wird auf 40°C abgekühlt, 62 g Cyclohexan und 86,4 g Isobutyraldehyd zugegeben und wieder auf Rückflußtemperatur angeheizt. Anschließend werden 31 g Wasser azeotrop abgeschieden und dann Lösungsmittel bzw. überschüssiges Blockierungsreagenz abdestilliert. Man erhält so das rohe Tetrahydroimidazol $B_3$.

$B_4$

In einem 1-l-Reaktionsgefäß mit Rühr-, Kühl- und Heizvorrichtung werden 60 g Ethylendiamin vorgelegt. 116 g Hydroxyethylacrylat werden langsam zugetropft, wobei die Reaktionstemperatur auf 80°C ansteigt. Nach 6 Stunden Rühren bei 180°C wird auf 40°C abgekühlt, 66 g Cyclohexan und 86,4 g Isobutyraldehyd zugegeben und wieder auf Rückflußtemperatur aufgeheizt. Anschließend werden 14 g Wasser azeotrop abgeschieden und dann Lösungsmittel und überschüssiges Blockierungsreagenz abdestilliert. Man erhält so das rohe Tetrahydroimidazol $B_4$.

$B_5$

In einem 1-l-Reaktionsgefäß mit Rühr-, Kühl- und Heizvorrichtung werden 176 g N,N'-Dimethylethylendiamin und 171 g Cyclohexan unter $N_2$-Atmosphäre vorgelegt und auf 10°C abgekühlt. Anschließend werden bei 10°C 173 g Isobutyraldehyd zugetropft. Anschließend wird noch 1 Stunde bei 10°C gerührt, auf Rückflußtemperatur erhöht und 45 g Wasser abdestilliert. Anschließend wird der Ansatz im Wasserstrahlvakuum (12 bis 16 Torr) fraktioniert destilliert. Man erhält das Tetrahydroimidazol $B_5$.

$B_6$

In einem 1-l-Reaktionsgefäß mit Rühr-, Kühl- und Heizvorrichtung werden 158,4 g Isobutyraldehyd und 171g Cyclohexan eingewogen und im Eisbad auf 10°C abgekühlt. 103 g Diethylentriamin werden unter $N_2$-Atmosphäre zugetropft und der Ansatz noch 1 Stunde bei 10°C gerührt. Anschließend wird auf Rückflußtemperatur aufgeheizt, 35,7 g Wasser azeotrop abdestilliert und dann überschüssiges Blockierungsreagenz und Lösungsmittel abdestilliert. Man erhält den rohen Tetrahydroimidazolvernetzer $B_6$.

$B_7$

In einen 1-l-Reaktionsgefäß mit Rühr-, Kühl- und Heizvorrichtung werden 88 g 1-Amino-3-(methylamino)-propan vorgelegt. 128 g Butylacrylat werden zugetropft und dabei die Temperatur auf 80°C gesteigert. Nach 6 Stunden Rühren bei 80°C wird auf 40°C abgekühlt, 75,6 g Cyclohexan und 86,4 g Isobutyraldehyd zugegeben

und dann auf Rückflußtemperatur aufgeheizt. 17,2 g Wasser werden azeotrop abgeschieden und dann überschüssiges Blockierungsreagenz und Lösungsmittel abdestilliert. Man erhält das rohe Hexahydropyrimidin $B_7$.

$B_8$

In einem 1-l-Reaktionsgefäß mit Rühr-, Kühl- und Heizvorrichtung werden 200 g Isobutyraldehyd und 133 g Cyclohexan unter $N_2$-Atmosphäre vorgelegt und im Eisbad auf 10°C gekühlt. 176,6 g 1-Amino-3-(methylamino)-propan werden langsam zugetropft. Der Ansatz wird anschließend noch 1 Stunde bei 10°C nachgerührt, dann auf Rückflußtemperatur erhitzt bis 52 g Wasser abgespalten sind. Nach Abdestillieren von Lösungsmittel und nicht umgesetztem Blockierungsreagenz erhält man das Hexahydropyrimidin $B_8$.

$B_9$

Das rohe Hexahydropyrimidin $B_8$ wird im Wasserstrahlvakuum (12 bis 16 Torr) fraktioniert destilliert, und je 5% Vor- bzw. Nachlauf verworfen. 90 g des so erhaltenen Hexahydropyrimidins $B_8$ werden unter $N_2$-Atmosphäre zusammen mit 53,2 g Hexamethylendiisocyanat gerührt. Die anfangs exotherme Reaktion wird durch Kühlen bzw. Heizen 6 Stunden bei 60°C gehalten. Man erhält so das Bishexahydropyrimidin $B_9$.

$B_{10}$

307,2 g 2-Ethylhexanal und 171 g Cyclohexan werden unter $N_2$-Atmosphäre in einem 1-l-Reaktionsgefäß mit Rühr-, Kühl- und Heizvorrichtung vorgelegt und auf 10°C abgekühlt. 176 g 1-Amino-3-(methylamino)-propan werden langsam bei 10°C zugetropft, dann wird noch 1 Stunde bei 10°C nachgerührt, anschließend auf Rückflußtemperatur aufgeheizt und 41 g Wasser azeotrop abgeschieden. Lösungsmittel und überschüssiges Blockierungsreagenz werden abdestilliert und man erhält das rohe Hexahydropyrimidin $B_{10}$.

$B_{11}$

149,5 g Hexahydropyrimidin $B_8$, 282 g Dimerfettsäure ®Empol 1010 (Produkt der Fa. Unilever) und 185 g Xylol werden in einem Reaktionsgefäß mit Rühr-, Kühl- und Heizvorrichtung unter $N_2$-Atmosphäre eingewogen und am Wasserabscheider solange erhitzt bis kein Wasser mehr abgespalten wird. Man erhält eine etwa 70%ige Lösung des Bishexahydropyrimidins $B_{11}$.

$B_{12}$

149,5 g Hexahydropyrimidin $B_8$ und 112,5 g Butylacetat werden in einem Reaktionsgefäß mit Rühr-, Kühl- und Heizvorrichtung vorgelegt und auf 70°C aufgeheizt. Dann werden 113 g 1,6-Hexandiolbisacrylsäureester rasch zugetropft und der Ansatz 4 Stunden bei 80°C gerührt. Man erhält eine etwa 70%ige Lösung des Bishexahydropyrimidins $B_{12}$.

$B_{13}$

In einem Reaktionsgefäß mit Rühr-, Kühl- und Heizvorrichtung werden unter $N_2$-Atmosphäre 216,7 g Methoxypropylacetat und 116,1 g eines Isocyanuratgruppen aufweisenden Polyisocyanats auf Basis von Hexamethylendiisocyanat, welches im wesentlichen aus N,N',N''-Tris-(6-isocyanatohexyl)-isocyanurat besteht, vorgelegt. Bei 50°C wird dann eine Mischung aus 29,9 g Hexahydropyrimidin $B_8$ und 70,7 g eines Oxazolans, welches durch Umsetzung von einem Äquivalent Diethanolamin mit einem Äquivalent Isobutyraldehyd unter Wasserabspaltung erhalten wurde, zugetropft, wobei die Temperatur auf 70°C ansteigt. Anschließend wird noch 10 Stunden gerührt. Man erhält eine etwa 50%ige Lösung des Hexahydropyrimidin- und Oxazolangruppen im Verhältnis von 1 : 2 enthaltenden Vernetzers $B_{13}$.

$B_{14}$

Bei Raumtemperatur werden in ein Reaktionsgefäß mit Rühr-, Kühl- und Heizvorrichtung 103 g Diethylentriamin, 44 g 1-Amino-3-(methylamino)-propan und 99 g Toluol eingewogen, 118 g Isobutyraldehyd zugetropft, auf Rückflußtemperatur aufgeheizt und dann am Wasserabscheider 29 g Wasser (theoretische Menge: 27 g) abgeschieden. Dann wird auf 60°C abgekühlt, 84 g Hexamethylendiisocyanat zugetropft und 4 Stunden gerührt.

Man erhält eine etwa 80%ige Lösung des Vernetzers $B_{14}$, der im statistischen Mittel zwei Aldimin- und eine Hexahydropyrimidingruppe enthält.

$B_{15}$

In einem Reaktionsgefäß mit Rühr-, Kühl- und Heizvorrichtung werden 149,5 g Hexahydropyrimidin $B_8$ eingewogen. Es werden dann bei 50°C 111 g Isophorondiisocyanat zugetropft und 4 Stunden bei 60°C nachgerührt. Anschließend wird der zwei Hexahydropyrimidingruppen enthaltende Vernetzer $B_{15}$ etwa 80%ig in Butylacetat gelöst.

$B_{16}$

In einem Reaktionsgefäß mit Rühr-, Kühl- und Heizvorrichtung werden 1 Äquivalent Trimethylolpropan und 4 Äquivalente Hexamethylendiisocyanat bei 70°C solange gerührt, bis der NCO-Gehalt 62,5% des ursprünglichen Werts erreicht hat. Zu 200 g dieses Vorproduktes werden 167,1 g Butylacetat gegeben und dann bei 50°C 189,8 g Vernetzer $B_8$ zugetropft. Nach 4 Stunden Rühren bei 60°C erhält man den Polyhexahydropyrimidinvernetzer $B_{16}$ als etwa 70%ige Lösung.

$B_{17}$

In einem Reaktionsgefäß mit Rühr-, Kühl- und Heizvorrichtung werden 74,7 g Hexahydropyrimidin $B_8$ und 88,3 g eines Oxazolans aus Diethanolamin und Isobutyraldehyd zusammen mit 247 g Butylacetat vorgelegt. Unter $N_2$-Atmosphäre werden dann bei 60°C 84 g Hexamethylendiisocyanat zugetropft und noch 10 Stunden gerührt. Man erhält eine 50%ige Lösung eines Hexahydropyrimidin- und Oxazolangruppen enthaltenden Vernetzers $B_{17}$.

$B_{18}$

In einem Reaktionsgefäß mit Rühr-, Kühl- und Heizvorrichtung werden 339 g eines Bisepoxids auf Basis von 2,2-Bis-(4-hydroxyphenyl)-propan (®Lekutherm X 20, BAYER AG) vorgelegt und auf 50°C aufgeheizt. Dann werden 73 g n-Butylamin und 88 g 1-Amino-3-(methylamino)-propan zugetropft und dabei die Temperatur auf 120°C gesteigert. Nach Zugabe von 164,6 g Toluol wird 6 Stunden bei 120°C gerührt, auf 60°C abgekühlt, 158,4 g Isobutyraldehyd zugetropft und anschließend das Reaktionswasser am Wasserabscheider abgetrennt. Man erhält nach Abtrennen von Toluol den Vernetzer $B_{18}$ der im wesentlichen Oxazolan- und Hexahydropyrimidingruppen als reaktive Zentren enthält.

$B_{19}$

In einem Reaktionsgefäß mit Rühr-, Kühl- und Heizvorrichtung werden unter $N_2$-Atmosphäre 232,3 g des unter $B_{13}$ genannten Polyisocyanats und 456,6 g Methoxypropylacetat eingewogen und auf 60°C aufgeheizt. Anschließend wird eine Mischung von 59,8 g Hexahydropyrimidin $B_8$, 70,7 g eines Oxazolans aus einem Äquivalent Diethanolamin und einem Äquivalent Isobutyraldehyd, sowie 93,8 g eines Bisketimins aus einem Äquivalent Diethylentriamin und 2 Äquivalente Methylisobutylketon welches noch eine freie sekundäre Aminogruppe aufweist, zugetropft und die Reaktionsmischung 6 Stunden bei 70°C gerührt. Man erhält eine 50%ige Lösung des Vernetzers $B_{19}$, der in statistischen Mittel eine Hexahydropyrimidingruppe, eine Oxazolangruppe und zwei Ketimingruppen enthält.

$B_{20}$

In ein Reaktionsgefäß mit Rühr-, Kühl- und Heizvorrichtung werden 864 g Cyclohexandimethanol, 1368 g ε-Caprolacton und 558 g Dimethyldiglykol 4 Stunden bei 140°C gerührt. Anschließend kühlt man auf 50°C ab und tropft zu 232,5 g des 80%igen Vorproduktes 168 g Hexamethylendiisocyanat zu, rührt solange bis der NCO-Wert 50% des ursprünglichen Werts erreicht hat, und gibt dann langsam 157,8 g Vernetzer $B_8$ zu. Nach 6 Stunden bei 70°C erhält man das Bishexahydropyrimidin $B_{20}$, welches mit 268 g Dimethyldiglykol auf einen Festgehalt von 60% verdünnt wird.

$B_{21}$

In einem Reaktionsgefäß mit Rühr-, Kühl- und Heizvorrichtung werden 300 g einer 70%igen Lösung eines polyfunktionellen Isocyanats (®Desmodur Z 4370, Bayer AG, Äquivalentgewicht ca. 365) und 276,7 g Dimethyldiglykol vorgelegt und auf 50°C erwärmt. In 1 Stunde werden 46,6 g Vernetzer $B_8$ und 110,1 g eines Oxazolans aus 1 Teil Diethanolamin und 1 Teil Isobutyraldehyd zugetropft. Anschließend wird 6 Stunden bei 70°C gerührt. Man erhält eine 50%ige Lösung des Polyvernetzers $B_{21}$.

$B_{22}$

126 g 3,4-Epoxycyclohexylmethyl-3',4'-epoxycyclohexancarboxylat (Diepoxid 126, Degussa AG) und 71,4 g Toluol werden in einem Reaktionsgefäß mit Rühr-, Kühl- und Heizvorrichtung auf 50°C erwärmt. Nach dem Zutropfen von 36,5 g n-Butylamin und 44 g 1-Amino-3-(methylamino)-propan wird auf 110°C erwärmt und 3 Stunden gerührt. Nach Abkühlen auf 50°C werden 79,2 g Isobutyraldehyd zugetropft, auf Rückflußtemperatur aufgeheizt und das Reaktionswasser azeotrop entfernt. Man erhält Vernetzer $B_{22}$ als 80%ige Lösung.

$B_{23}$

1023 g Butylacetat werden in einen 2-l-Kolben mit Rühr-, Kühl-, und Heizvorrichtung unter $N_2$-Atmosphäre auf 125°C erwärmt. In 4 Stunden wird eine Mischung aus 100 g Glycidylmethacrylat, 200 g Styrol, 300 g n-Butylacrylat und 400 g Methylmethacrylat sowie in 5 Stunden 57,1 g tert.-Butyl-peroctoat zugetropft. Nach 2 Stunden Rühren bei 128°C erhält man eine Copolymerisatlösung mit einem Festgehalt von 49,7%, 500 g der Copolymerisatlösung werden in einem 1-l-Kolben mit Rühr-, Kühl- und Heizvorrichtung vorgelegt, 26,7 g Vernetzer $B_8$ zugetropft, auf 120°C aufgeheizt und dann 3 Stunden gerührt. Man erhält eine 52,0%ige Lösung eines Hexahydropyrimidingruppen enthaltenden Copolymerisats, den Vernetzer $B_{23}$.

$B_{24}$

In einem 1 l Reaktionsgefäß mit Rühr-, Kühl- und Heizvorrichtung werden 103 g Diethylentriamin und 60 g Cyclohexan vorgelegt. Dann werden 72 g Isobutyraldehyd zugetropft und anschließend am Wasserabscheider 17,8 g Wasser abgetrennt. Das so erhaltene Tetrahydroimidazolderivat, welches noch eine primäre Aminogruppe enthält, wird destillativ von Cyclohexan befreit. Nach Zugabe von einem Mol eines Oxazolans aus Diisopropanolamin und 2-Ethylhexanal, welches noch eine freie Hydroxylgruppe aufweist, werden 168 g Hexamethylendiisocyanat langsam bei 60°C zugetropft und noch 6 Stunden gerührt. Nach Verdünnen mit Methoxypropylacetat erhält man eine ca. 50%ige Lösung eines eine Urethan- und eine Harnstoffgruppe tragenden Vernetzers mit im statistischen Mittel eine Tetrahydroimidazol- und eine Oxazolangruppe als reaktive Zentren.

III) Erfindungsgemäßes Verfahren

Die Maleinsäureanhydridcopolymerisate A) und die Hexahydropyrimidin- bzw. Tetrahydroimidazolgruppen enthaltenden Vernetzer werden bei Raumtemperatur miteinander vermischt und gegebenenfalls durch Zugabe eines organischen Lösungs- bzw. Verdünnungsmittel auf eine verarbeitungsfähige Viskosität eingestellt. Die Filme werden mit einem Filmzieher auf Glasplatten aufgezogen, wobei die Filmstärke der Naßfilme 120 bis 150 µm beträgt. Die bei Raumtemperatur aufgezogenen Filme sind alle nach spätestens 60 Minuten klebfrei durchgetrocknet. Nach Alterung, d.h. 16 bis 20 Stunden Trocknung bei Raumtemperatur erhält man vernetzte, klare Filme mit sehr guter Filmmechanik. In der folgenden Tabelle werden die Zusammensetzungen der Bindemittelkombinationen, Trocknungstemperaturen, Festgehalte, Anfangsviskositäten und Standzeit und außerdem die Lösungsmittelfestigkeit als Grad der Vernetzung angeführt.

Die Lösungsmittelfestigkeit wird durch einen Wischtest mit einem Superbenzin – getränkten Wattebausch geprüft. Angegeben wird die Zahl der Doppelhübe, nach denen der Film ohne sichtbare Veränderung bleibt.

Die Festgehalte der Bindemittelzusammensetzungen wurden rechnerisch ermittelt, und zwar auf Grundlage der experimentell bestimmten Festgehalte der Maleinsäureanhydridcopolymerisate und der berechneten Festgehalte der Vernetzer.

Tabelle 2 (Beispiele)

| | 1 | 2 | 3 | 4 | 5 | 6 | 7 |
|---|---|---|---|---|---|---|---|
| Polyanhydrid | 70 g $A_6$ | 70 g $A_7$ | 70 g $A_9$ | 70 g $A_8$ | 70 g $A_5$ | 70 g $A_2$ | 70 g $A_1$ |
| Vernetzer | 6,8 g $B_{10}$ | 8,5 g $B_{10}$ | 5,1 g $B_{10}$ | 7,6 g $B_{10}$ | 3,7 g $B_{10}$ | 7,7 g $B_{10}$ | 11,4 g $B_{10}$ |
| Molverhältnis I 1) | 1:0,6 | 1:0,6 | 1:0,75 | 1:0,6 | 1:0,6 | 1:0,6 | 1:0,6 |
| Molverhältnis II 2) | 1:0,6 | 1:0,6 | 1:0,75 | 1:0,6 | 1:0,6 | 1:0,6 | 1:0,6 |
| Festgehalt der Bindemittel-Kombination (gegebenenfalls nach Zugabe von Verdünnungsmittel) | 54,7 % | 55,0 % | 53,8 % | 57,9 % | 59,6 % | 42,3 % | 56,4 % |
| Anfangsviskosität (mPa.s) | 2620 | 1370 | 640 | 1170 | 1270 | 600 | 5960 |
| Standzeit (Std.) | 1 | 1 | 2 | 1 | 2 | 1 | 1 |
| Lösemittelfestigkeit (Superbenzin-Wischtest) | >150 | >150 | >150 | >150 | >150 | >150 | >200 |
| Aussehen des Films | farblos, klar | farblos, klar | farblos, klar | farblos, klar | farblos, klar | farblos, klar | farblos, klar |

1) Molverhältnis von Säureanhydridgruppen zu Hexahydropyrimidin- bzw. Tetrahydrimidazolgruppen

2) Molverhältnis von Säureanhydridgruppen zu allen blockierten Aminogruppen

Tabelle 2 (Beispiele)

| | 8 | 9 | 10 | 11 | 12 | 13 | 14 |
|---|---|---|---|---|---|---|---|
| Polyanhydrid | 70 g $A_3$ | 70 g $A_4$ | 72,6 g $A_6$ | 72,6 g $A_6$ | 72,6 g $A_6$ | 72,6 g $A_6$ | 72,6 g $A_6$ |
| Vernetzer | 7,2 g $B_{10}$ | 3,6 g $B_{10}$ | 12,5 g $B_9$ | 10,5 g $B_1$ | 10,5 g $B_2$ | 10,5 g $B_3$ | 12,5 g $B_4$ |
| Molverhältnis I 1) | 1:0,6 | 1:0,6 | 1:0,9 | 1:0,7 | 1:1,1 | 1:0,9 | 1:0,9 |
| Molverhältnis II 2) | 1:0,6 | 1:0,6 | 1:0,9 | 1:0,7 | 1:1,1 | 1:0,9 | 1:0,9 |
| Festgehalt der Bindemittel-Kombination (gegebenenfalls nach Zugabe von Verdünnungsmittel) | 56,1 % | 54,8 % | 58,1 % | 60,1 % | 60,1 % | 60,1 % | 58,1 % |
| Anfangsviskosität (mPa.s) | 2680 | 1370 | 4810 | 6540 | 7810 | 9820 | 8370 |
| Standzeit (Std.) | 1 | 2 | 1 | 0,5 | 0,5 | 1 | 1 |
| Lösemittelfestigkeit (Superbenzin-Wischtest) | >150 | >150 | >200 | >150 | >150 | >150 | >150 |
| Aussehen des Films | farblos, klar | farblos, klar | farblos, klar | farblos, klar | farblos, klar | farblos, klar | farblos, klar |

1) Molverhältnis von Säureanhydridgruppen zu Hexahydropyrimidin- bzw. Tetrahydrimidazolgruppen

2) Molverhältnis von Säureanhydridgruppen zu allen blockierten Aminogruppen

Tabelle 2 (Beispiele)

| | 15 | 16 | 17 | 18 | 19 | 20 | 21 |
|---|---|---|---|---|---|---|---|
| Polyanhydrid | 72,6 $A_6$ | 72,6 g $A_6$ | 72,6 g $A_6$ | 72,6 g $A_6$ | 100 g $A_{10}$ | 100 g $A_{10}$ | 100 g $A_{10}$ |
| Vernetzer | 13,3 g $B_5$ | 10,5 g $B_6$ | 10,5 g $B_7$ | 10,5 g $B_8$ | 26,7 g $B_{11}$ | 26,7 g $B_{16}$ | 26,7 g $B_{12}$ |
| Molverhältnis I[1)] | 1:1,5 | 1:1,1 | 1:0,6 | 1:1,2 | 1:0,7 | 1:1 | 1:1,2 |
| Molverhältnis II[2)] | 1:1,5 | 1:2,2 | 1:0,6 | 1:1,2 | 1:0,7 | 1:1 | 1:1,2 |
| Festgehalt der Bindemittel-Kombination (gegebenenfalls nach Zugabe von Verdünnungsmittel) | 58,2 % | 60,1 % | 60,1 % | 60,1 % | 58,9 % | 58,9 % | 58,9 % |
| Anfangsviskosität (mPa.s) | 2650 | 7310 | 4500 | 4180 | 13020 | 2124 | 1038 |
| Standzeit (Std.) | 6 | 1 | 3 | 4 | 6 | >8 | 1 |
| Lösemittelfestigkeit (Superbenzin-Wischtest) | >150 | >150 | >150 | >150 | >100 | >200 | >200 |
| Aussehen des Films | farblos, klar | Spur gelb, klar | Spur gelb, klar | farblos, klar | gelb, klar | farblos, klar | Spur gelb klar |

1) Molverhältnis von Säureanhydridgruppen zu Hexahydropyrimidin- bzw. Tetrahydrimidazolgruppen

2) Molverhältnis von Säureanhydridgruppen zu allen blockierten Aminogruppen

Tabelle 2 (Beispiele)

| | 22 | 23 | 24 | 25 | 26 | 27 |
|---|---|---|---|---|---|---|
| Polyanhydrid | 100 g $A_{10}$ | 100 g $A_{10}$ | 100 g $A_{10}$ | 100 g $A_{10}$ | 70 g $A_{10}$ | 70 g $A_{10}$ |
| Vernetzer | 37,3 g $B_{17}$ | 37,3 g $B_{13}$ | 23,3 g $B_{15}$ | 23,3 g $B_{14}$ | 12,9 g $B_{18}$ | 23,0 g $B_{19}$ |
| Molverhältnis I[1)] | 1:0,9 | 1:0,3 | 1:1,2 | 1:0,7 | 1:0,5 | 1:0,25 |
| Molverhältnis II[2)] | 1:1,8 | 1:0,9 | 1:1,2 | 1:2,0 | 1:0,9 | 1:1 |
| Festgehalt der Bindemittel-Kombination (gegebenenfalls nach Zugabe von Verdünnungsmittel) | 54,4 % | 54,4 % | 60,5 % | 60,5 % | 59,7 % | 54,5 % |
| Anfangsviskosität (mPa.s) | 529 | 1487 | 1454 | 2750 | 6490 | 4500 |
| Standzeit (Std.) | 16 | 8 | 8 | 1 | 1 | 1 |
| Lösemittelfestigkeit (Superbenzin-Wischtest) | )200 | )200 | )200 | )200 | )200 | )200 |
| Aussehen des Films | farblos, klar | farblos, klar | farblos, klar | farblos, klar | farblos, leichter Schleier | farblos klar |

1) Molverhältnis von Säureanhydridgruppen zu Hexahydropyrimidin- bzw. Tetrahydrimidazolgruppen

2) Molverhältnis von Säureanhydridgruppen zu allen blockierten Aminogruppen

Tabelle 2 (Beispiele)

| | 28 | 29 | 30 | 31 | 32 |
|---|---|---|---|---|---|
| Polyanhydrid | 70 g $A_{11}$ | 70 g $A_{11}$ | 70 g $A_{10}$ | 80 g $A_{11}$ | 70 g $A_{11}$ |
| Vernetzer | 22,3 g $B_{20}$ | 17,5 g $B_{21}$ | 11,1 g $B_{22}$ | 74 g $B_{23}$ | 28 g $B_{24}$ |
| Molverhältnis I 1) | 1:0,6 | 1:0,15 | 1:0,4 | 1:0,4 | 1:0,4 |
| Molverhältnis II 2) | 1:0,6 | 1:0,5 | 1:0,8 | 1:0,4 | 1:0,7 |
| Festgehalt der Bindemittel-Kombination (gegebenenfalls nach Zugabe von Verdünnungsmittel) | 52,4 % | 50,0 % | 59,4 % | 50,6 % | 51,6 % |
| Anfangsviskosität (mPa.s) | 1010 | 800 | 2210 | 820 | 1630 |
| Standzeit (Std.) | 6 | 8 | 3 | 1 | 2 |
| Lösemittelfestigkeit (Superbenzin-Wischtest) | >100 | >150 | >200 | >150 | >150 |
| Aussehen des Films | farblos, klar | farblos, klar | farblos, klar | farblos, klar | farblos klar |

1) Molverhältnis von Säureanhydridgruppen zu Hexahydropyrimidin- bzw. Tetrahydrimidazolgruppen

2) Molverhältnis von Säureanhydridgruppen zu allen blockierten Aminogruppen

**Ansprüche**

1. Verfahren zur Herstellung von feuchtigkeitshärtenden Bindemittelkompositionen durch Abmischung und gegebenenfalls Umsetzung unter Feuchtigkeitsausschluß von

A) 30 bis 99 Gew.-Teilen mindestens einer Verbindung, welche mindestens zwei intramolekulare Carbonsäureanhydridgruppen enthält, mit

B) 1 bis 70 Gew.-Teilen an, organischen Verbindungen mit blockierten Aminogruppen, aus denen unter dem Einfluß von Feuchtigkeit freie primäre und/oder sekundäre Aminogruppen gebildet werden, gegebenenfalls unter Mitverwendung von Lösungsmitteln und/oder sonstigen aus der Lacktechnologie bekannten Hilfs- und Zusatzstoffen, dadurch gekennzeichnet, daß man als Verbindungen A) in an sich bekannter Weise hergestellte, Bernsteinsäureanhydrid-Einheiten aufweisende Copolymerisate des Molekulargewichtsbereichs Mw von 1500 bis 75000 von

a) 4,5 bis 45 Gew.-Teile Maleinsäureanhydrid,

b) 5 bis 80 Gew.-Teile Monomeren der Formel

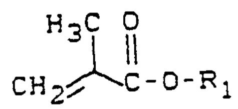

und/oder der Formel

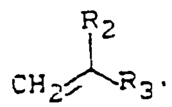

und

c) 15 bis 92 Gew.-Teile Monomeren der Formel

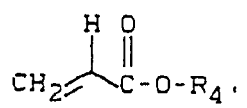

wobei in den genannten Formeln

$R_1$ für einen aliphatischen oder cycloaliphatischen, gegebenenfalls Sauerstoff, Schwefel oder Stickstoff als Heteroatom enthaltenden Kohlenwasserstoffrest mit 1 bis 12 Kohlenstgffatomen steht,

$R_2$ für Wasserstoff, eine Methyl- oder Ethylgruppe oder für Chlor oder Fluor steht,

$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht, und

$R_4$ bezüglich seiner Bedeutung der für $R_1$ gemachten Definition entspricht,

und als Verbindungen B), gegebenenfalls gegenüber Säureanhydridgruppen reaktionsfähige Wasserstoffatome aufweisende, Hexahydropyrimidin- oder Tetrahydroimidazolgruppen und gegebenenfalls außer diesen noch weitere blockierte Aminogruppen aufweisende organische Verbindungen verwendet,

wobei die Mengenverhältnisse der Einzelkomponenten unter Einbeziehung der gegebenenfalls in Abwesenheit von Feuchtigkeit zwischen den Komponenten A) und B) spontan ablaufenden Additionsreaktion so gewählt werden, daß in der resultierenden Komposition auf jede Hexahydropyrimidin- bzw. Tetrahydroimidazolgruppe 0,25 bis 50 Anhydridgruppen entfallen.

2. Verfahren gemäß Anspruch 1, dadurch gekennzeichnet, daß die Komponente A)
a) 4,5 bis 19 Gew.-Teile Maleinsäureanhydrid,
b) 41 bis 65 Gew.-Teile mindestens eines Monomeren der Formeln

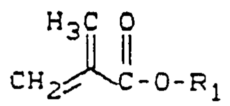

oder

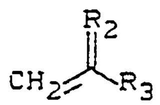

und
c) 25 bis 50 Gew.-Teile mindestens eines Monomeren der Formel

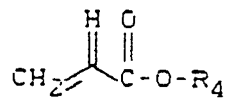

in copolymerisierter Form aufweist, wobei $R_1$, $R_2$, $R_3$ und $R_4$ die in Anspruch 1 genannte Bedeutung haben.

3. Verfahren gemäß Anspruch 1 bis 2, dadurch gekennzeichnet, daß die Komponente A) ein Copolymerisat darstellt, welches pro 100 Gew.-Teilen Maleinsäureanhydrid 40 bis 140 Gew.-Teile an Monomeren ausgewählt aus der Gruppe bestehend aus Styrol, Vinyltoluol, α-Methylstyrol, α-Ethylstyrol, kernsubstituierten, gegebenenfalls Isomerengemische darstellen Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

4. Verfahren gemäß Anspruch 1 bis 3, dadurch gekennzeichnet, daß die Komponente B) aus Verbindungen des Molekulargewichtsbereichs 86 bis 10.000 besteht, die (im statistischen Mittel) 0,5 bis 4 Struktureinheiten der allgemeinen Formel

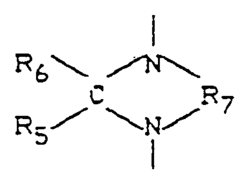

sowie gegebenenfalls (i) gegenüber Säureanhydridgruppen reaktionsfähige Gruppen ausgewählt aus der Gruppe bestehend aus Hydroxyl-, primären und sekundären Aminogruppen und/oder gegebenenfalls (ii) gegenüber Säureanhydridgruppen inerte, reversibel blockierte Aminogruppen ausgewählt aus der Gruppe bestehend aus Oxazolan-, Aldimin- und Ketimingruppen enthalten,
wobei

$R_5$ und $R_6$ für gleiche oder verschiedene Reste stehen und Wasserstoff, aliphatische Kohlenwasserstoffreste von $C_1$-$C_{18}$, cycloaliphatische Kohlenwasserstoffreste von $C_5$-$C_{10}$, araliphatische Kohlenwasserstoffreste von $C_7$-$C_{18}$ oder Phenylreste bedeuten, wobei die beiden Reste $R_5$ und $R_6$ zusammen mit dem Kohlenstoffatom des heterocyclischen Rings auch einen 5- oder 6-gliedrigen cycloaliphatischen Ring bilden können, und

$R_7$ für einen zweiwertigen aliphatischen Kohlenwasserstoffrest mit 2 bis 4 Kohlenstoffatomen steht, mit der Maßgabe, daß zwischen den beiden Stickstoffatomen 2 oder 3 Kohlenstoffe angeordnet sind.

5. Verfahren gemäß Anspruch 1 bis 4, dadurch gekennzeichnet, daß man als Hilfs- und Zusatzstoffe, gegebenenfalls neben weiteren Hilfs- und Zusatzstoffen, weitere, gegebenenfalls gegenüber Säureanhydridgruppen reaktionsfähige Hydroxyl- oder Aminogruppen aufweisende, Hexahydropyrimidingruppen- und Tetrahydroimidazolgruppen-freie Vernetzungsmittel mit reversibel blockierten Aminogruppen, ausgewählt aus der Gruppe bestehend aus Oxazolan-, Aldimin- und Ketimingruppen verwendet.

6. Verwendung der gemäß Anspruch 1 bis 5 erhältlichen Bindemittelkombinationen als unter dem Einfluß von Feuchtigkeit aushärtbare Lacke oder Beschichtungsmassen oder zur Herstellung derartiger Lacke oder Beschichtungsmassen.

## Claims

1. A process for the production of moisture-curing binder compositions by mixing and optionally reacting

A) 30 to 99 parts by weight of at least one compound containing at least two intramolecular carboxylic anhydride groups with

B) 1 to 70 parts by weight organic compounds containing blocked amino groups from which free primary and/or secondary amino groups are formed under the effect of moisture

in the absence of moisture, optionally using solvents and/or other auxiliaries and additives known from paint technology, characterized in that copolymers prepared in known manner containing succinic anhydride units and having a molecular weight Mw of 1,500 to 75,000 of

a) 4.5 to 45 parts by weight maleic anhydride,

b) 5 to 80 parts by weight monomers corresponding to the formula

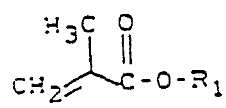

and/or to the formula

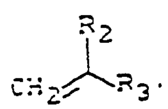

and

c) 15 to 92 parts by weight monomers corresponding to the formula

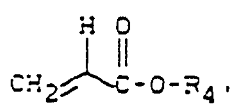

in which

$R_1$ . is an aliphatic or cycloaliphatic $C_{1-12}$ hydrocarbon radical optionally containing oxygen, sulfur or nitrogen as hetero atom,

$R_2$ is hydrogen, a methyl or ethyl group or chlorine or fluorine,

$R_3$ is an aliphatic $C_{2-15}$ hydrocarbon radical, a cycloaliphatic $_{5-10}$ hydrocarbon radical, an araliphatic $C_{7-18}$ hydrocarbon radical, an aromatic $C_{6-12}$ hydrocarbon radical, chlorine, fluorine, a nitrile group or a $C_{12-18}$ hydrocarbon radical containing one or more hetero atoms from the group consisting of hydrogen, oxygen, sulfur and nitrogen in the form of ether, ester, amide, urethane, urea, thioester, thioether, oxirane, ketone, lactam or lactone groups and

$R_4$ corresponds in its meaning to definition given for $R_1$,

are used as the compounds A) and organic compounds optionally containing anhydride-reactive hydrogen atoms and bearing hexahydropyrimidine or tetrahydroimidazole groups and, optionally, other blocked amino groups in addition to those groups are used as the compounds B),

the quantities in which the individual components are used, including the addition reaction, if any, taking place spontaneously between components A) and B) in the absence of moisture, being selected so that, for every hexahydropyrimidine or tetrahydroimidazole group, there are 0.25 to 50 anhydride groups in the resulting composition.

2. A process as claimed in claim 1, characterized in that component A) contains

a) 4.5 to 19 parts by weight maleic anhydride,

b) 41 to 65 parts by weight of at least one monomer corresponding to the formulae

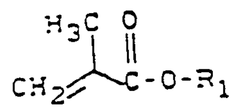

or

and

c) 25 to 50 parts by weight of at least one monomer corresponding to the formula

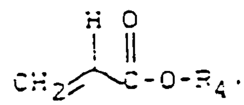

in copolymerized form, $R_1$ $R_2$ $R_3$ and $R_4$ being as defined in claim 1.

3. A process as claimed in claims 1 to 2, characterized in that component A) is a copolymer containing per 100 parts by weight maleic anhydride from 40 to 140 parts by weight monomers selected from the group consisting of styrene, vinyl toluene, α-methyl styrene, α-ethyl styrene, nucleus-substituted diethyl styrenes, isopropyl styrenes, butyl styrenes and methoxy styrenes optionally in the form of isomer mixtures, ethyl vinyl ether, n-propyl vinyl ether, isopropyl vinyl ether, n-butyl vinyl ether, isobutyl vinyl ether, vinyl acetate, vinyl propionate, vinyl butyrate and mixtures of these monomers in copolymerized form, optionally in addition to other comonomers.

4. A process as claimed in claims 1 to 3, characterized in that component B) consists of compounds having a molecular of 86 to 10,000 which (on a statistical average) contain 0.5 to 4 structural units corresponding to the general formula

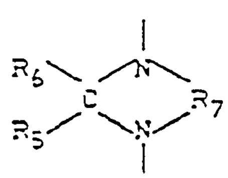

and optionally (i) anhydride-reactive groups selected from the group consisting of hydroxyl groups, primary and secondary amino groups and/or optionally (ii) anhydride-inert reversibly blocked amino groups selected from the group consisting of oxazolane, aldimine and ketimine groups ; in the above formulae

$R_5$ and $R_6$ may be the same or different and represent hydrogen, aliphatic $C_{1-18}$ hydrocarbon radicals, cycloaliphatic $C_{5-10}$ hydrocarbon radicals, araliphatic $C_{7-18}$ hydrocarbon radicals or phenyl radicals; $R_5$ and $R_6$, together with the carbon atom of the heterocyclic ring, may also form a 5- or 6-membered cycloaliphatic ring and

$R_7$ is a difunctional aliphatic $C_{2-4}$ hydrocarbon radical with the proviso that 2 or 3 carbons are arranged between the two nitrogen atoms.

5. A process as claimed in claims 1 to 4, characterized in that crosslinking agents containing reversibly blocked amino groups selected from the group consisting of oxazolane, aldimine and ketimine groups and other, optionally anhydride-reactive hydroxyl or amino groups, but free from hexahydropyrimidine and tetrahydroimidazole groups are used as the auxiliaries and additives, optionally in addition to other auxiliaries and additives.

6. The use of the binder combinations obtainable by the process claimed in claims 1 to 5 as moisture-curing paints or coating compounds or for the production of such paints or curing compounds.

## Revendications

1. Procédé de préparation de compositions de liants durcissant sous l'action de l'humidité par mélange et le cas échéant réaction, à l'abri de l'humidité, de

A) 30 à 99 parties en poids d'au moins un composé contenant au moins deux groupes anhydride d'acide carboxylique intramoléculaires, avec

B) 1 à 70 parties en poids de composés organiques contenant des groupes amino bloqués à partir desquels, sous l'action de l'humidité, il y a formation de groupes amino primaires et/ou secondaires libres, éventuellement avec utilisation conjointe de solvants et/ou d'autres produits auxiliaires et additifs connus dans l'industrie des vernis, caractérisé en ce que l'on utilise en tant que composés A des copolymères contenant des motifs d'anhydride succinique, préparés de manière connue en soi, à des poids moléculaires Mw dans l'intervalle de 1500 à 75000, de

a) 4,5 à 45 parties en poids d'anhydride maléique,

b) 5 à 80 parties en poids de monomères de formule

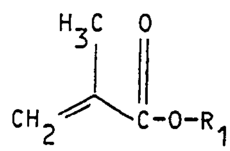

et/ou de formule

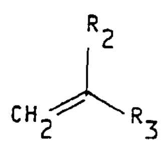

et

c) 15 à 92 parties en poids de monomères de formule

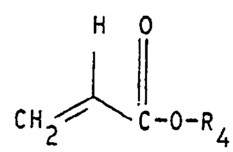

dans lesquelles

$R_1$ représente un radical hydrocarboné aliphatique ou cycloaliphatique en $C_1$-$C_{12}$ contenant éventuellement de l'oxygène, du soufre ou de l'azote en tant qu'hétéroatome,

$R_2$ représente l'hydrogène, un groupe méthyle ou éthyle, ou le chlore ou le fluor,

$R_3$ représente un radical hydrocarboné aliphatique en $C_2$-$C_{15}$, un radical hydrocarboné cycloaliphatique en $C_5$-$C_{10}$, un radical hydrocarboné araliphatique en $C_7$-$C_{18}$, un radical hydrocarboné aromatique en $C_6$-$C_{12}$, le chlore, le fluor, un groupe nitrile ou un radical hydrocarboné en $C_2$-$C_{18}$ contenant un ou plusieurs hétéroatomes du groupe consistant en l'oxygène, le soufre et l'azote à l'état de groupes éther, ester, amide, uréthanne, urée, thioester, thioéther, oxiranne, cétone, lactame ou lactone et

$R_4$ a les mêmes significations que $R_1$,

et en tant que composés B) des composés organiques contenant éventuellement des atomes d'hydrogène réactifs avec les groupes anhydride d'acide, des groupes hexahydropyrimidine ou tétrahydroimidazole et le cas échéant, en plus de ceux-ci, d'autres groupes amino bloqués,
les proportions relatives entre les composants individuels, tenu compte de la réaction d'addition se déroulant le cas échéant spontanément en l'absence d'humidité entre les composants A) et B), étant choisies en sorte que, dans la composition résultante, il y ait 0,25 à 50 groupes anhydride par groupe hexahydropyrimidine ou tétrahydroimidazole,

2. Procédé selon la revendication 1 caractérisé en ce que le composant A) contient, à l'état copolymérisé,

a) 4,5 à 19 parties en poids d'anhydride maléique,

b) 41 à 65 parties en poids d'au moins un monomère de formule

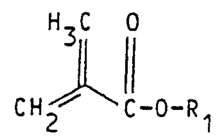

ou

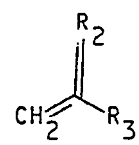

et

c) 25 à 50 parties en poids d'au moins un monomère de formule

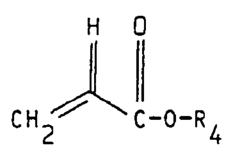

les symboles $R_1$, $R_2$, $R_3$ et $R_4$ ayant les significations indiquées dans la revendication 1.

3. Procédé selon les revendications 1 et 2, caractérisé en ce que le composant A) est un copolymère qui, pour 100 parties d'anhydride maléique, contient, à l'état copolymérisé, et éventuellement avec d'autres comonomères, 40 à 140 parties en poids de monomères choisis dans le groupe formé par le styrène, le vinyltoluène, l'α-méthylstyrène, l'α-éthylstyrène, les diéthylstyrènes substitués dans le noyau et constituant le cas échéant des mélanges d'isomères, les isopropylstyrènes, les butylstyrènes et les méthoxystyrènes, l'oxyde de vinyle et d'éthyle, l'oxyde de vinyle et de n-propyle, l'oxyde de vinyle et d'isopropyle, l'oxyde de vinyle et de n-butyle, l'oxyde de vinyle et d'isobutyle, l'acétate de vinyle, le propionate de vinyle, le butyrate de vinyle et les mélanges quelconques de ces monomères.

4. Procédé selon les revendications 1 à 3, caractérisé en ce que le composant B) consiste en composés dont le poids moléculaire se situe dans l'intervalle de 86 à 10000 et qui contiennent (en moyenne statistique) 0,5 à 4 motifs de structure de formule générale

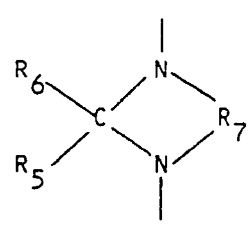

et le cas échéant (i) des groupes réactifs avec les groupes anhydride d'acide, choisis parmi les groupes hydroxy, amino primaires et/ou secondaires, et/ou le cas échéant (ii) des groupes amino bloqués de manière réversible, inertes à l'état des groupes anhydride d'acides, choisis parmi les groupes oxazolane, aldimine et cétimine, les symboles de la formule ci-dessus ayant les signification suivantes :

$R_5$ et $R_6$, ayant des significations identiques ou différentes, représentent l'hydrogène, des radicaux hydrocarbonés aliphatiques en $C_1$-$C_{18}$, des radicaux hydrocarbonés cycloaliphatiques en $C_5$-$C_{10}$, des radicaux hydrocarbonés araliphatiques en $C_7$-$C_{18}$ ou des radicaux phényles, les deux substituants $R_5$ et $R_6$ pouvant également former, avec l'atome de carbone de l'hétérocycle, un cycle aliphatique à 5 ou 6 chaînons, et

$R_7$ représente un radical hydrocarboné aliphatique divalent en $C_2$-$C_4$, sous réserve qu'il y ait deux ou trois atomes de carbone entre les deux atomes d'azote.

5. Procédé selon les revendications 1 à 4, caractérisé en ce que l'on utilise en tant que produits auxiliaires et additifs, le cas échéant avec d'autres produits auxiliaires et additifs, d'autres agents réticulants exempts de groupes hexahydropyrimidine et tétrahydroimidazole, contenant le cas échéant des groupes hydroxy ou amino réactifs avec les groupes anhydride d'acides, à groupes amino bloqués de manière réversible choisis parmi les groupes oxazolane, aldimine et cétimine.

6. Utilisation des combinaisons de liants obtenues selon les revendications 1 à 5 en tant que vernis ou masses de revêtement durcissables sous l'action de l'humidité ou pour la préparation de tels vernis ou masses de revêtement.